# EUROPEAN PATENT APPLICATION

(11) **EP 4 588 983 A1**
(43) Date of publication of application: **23.07.2025**
(21) Application number: 23877258.6
(22) Date of filing: 06.10.2023
(51) Int. Cl.: C09D 5/02, C09D 201/00

(54) **COATING LIQUID, METHOD FOR PRODUCING COATING LIQUID, AND METHOD FOR PRODUCING COMPOSITE MATERIAL**

(30) Priority: 11.10.2022 JP 2022163421
(71) Applicant: Resonac Corporation, Tokyo 105-7325 (JP)
(72) Inventor: MARUYAMA, Naoki, Tokyo 105-7325 (JP); IZUMI, Hiroyuki, Tokyo 105-7325 (JP); ARAKI, Motoaki, Tokyo 105-7325 (JP); MURATA, Naoki, Tokyo 105-7325 (JP)
(74) Representative: Hoffmann Eitle
(86) International application number: PCT/JP2023/036610
(87) International publication number: WO 2024/080254

(57) **Abstract**

A coating liquid includes: emulsion particles containing a binder resin; aerogel particles; and a liquid medium, wherein a content of chloride ions is 50 ppm by mass or less, and a content of sulfate ions is 50 ppm by mass or less.

## Description

### Technical Field

The present invention relates to a coating liquid, a method for producing a coating liquid, and a method for producing a composite material.

### Background Art

Aerogel is known as a material excellent in heat insulating material. In addition, a method has been proposed in which an aerogel is processed into particles and used as a constituent material of a heat insulating material (for example, Patent Literatures 1 and 2). Patent Literature 1 proposes that a particulate aerogel is used as a filler between resin plates and the like constituting a heat insulating window. Patent Literature 2 discloses a method for producing a heat insulating material (molded body) by preparing an aqueous dispersion containing aerogel particles and organic fibers and then further press-molding an intermediate product obtained by evaporating water.

### Citation List

### Patent Literature

Patent Literature 1: Japanese Unexamined Patent Publication No. 2012-091943
Patent Literature 2: Japanese Unexamined Patent Publication No. 2014-035044

### Summary of Invention

### Technical Problem

The composite material in which the aerogel particles are dispersed in the binder resin is expected to expand the application target and the applications by making it into a coating liquid. However, when the composite material is attempted to be made into a coating liquid, it may be difficult to uniformly disperse the aerogel particles and the binder resin in the coating liquid.

In addition, in order to make the coating liquid applicable to various objects, it is desired that the coating liquid has low corrosiveness to metals such as an iron plate.

Therefore, an object of the present invention is to provide a coating liquid having excellent dispersibility of aerogel particles and a binder resin, capable of forming a composite material containing aerogel particles and a binder resin, and having low corrosiveness to metal. Another object of the present invention is to provide a method for producing the coating liquid and a method for producing a composite material using the coating liquid.

### Solution to Problem

The present invention relates to, for example, the following [1] to [16].
[1] A coating liquid including:
   emulsion particles containing a binder resin;
   aerogel particles;
   a water-soluble polymer having a hydrophobic group; and
   a liquid medium, in which
   a content of chloride ions is 50 ppm by mass or less, and a content of sulfate ions is 50 ppm by mass or less.
[2] The coating liquid according to [1], in which at least a part of the aerogel particles forms aggregates.
[3] The coating liquid according to [2], in which the average diameter of the aggregates is 2 to 40 times the average diameter of the aerogel particles.
[4] The coating liquid according to any one of [1] to [3], in which the emulsion particles further contain a nonionic emulsifier.
[5] The coating liquid according to [4], in which the nonionic emulsifier is polyoxyethylene alkyl ether.
[6] The coating liquid according to any one of [1] to [5], in which the binder resin has a Tg of 10°C or lower.
[7] The coating liquid according to any one of [1] to [6], in which the hydrophobic group is an alkyl group having 6 to 26 carbons.
[8] A method for producing a coating liquid, the method including:
   an emulsion preparation step of preparing an emulsion including emulsion particles containing a binder resin, and a first liquid medium;
   a dispersion preparation step of mixing aerogel particles, a water-soluble polymer having a hydrophobic group, and a second liquid medium to obtain a dispersion containing the aerogel particles, the water-soluble polymer, and the second liquid medium; and
   a coating liquid production step of mixing the emulsion and the dispersion to obtain a coating liquid, in which
   a content of chloride ions in the coating liquid is 50 ppm by mass or less, and a content of sulfate ions in the coating liquid is 50 ppm by mass or less.
[9] The method for producing a coating liquid according to [8], in which
   the dispersion preparation step is a step of mixing the aerogel particles, the water-soluble polymer, and the second liquid medium to aggregate the aerogel particles, and
   the coating liquid production step is a step of obtaining a coating liquid containing aggregates of the aerogel particles.
[10] The method for producing a coating liquid according to [9], in which the average diameter of the aggregates is 2 to 40 times the average diameter of the aerogel particles.
[11] The method for producing a coating liquid according to any one of [8] to [10], in which the emulsion particles further contain a nonionic emulsifier.
[12] The method for producing a coating liquid according to [11], in which the nonionic emulsifier is polyoxyethylene alkyl ether.
[13] The method for producing a coating liquid according to any one of [8] to [12], in which the binder resin has a Tg of 10°C or lower.
[14] The method for producing a coating liquid according to any one of [8] to [13], in which the hydrophobic group is an alkyl group having 6 to 26 carbons.
[15] A method for producing a composite material, the method including:
   an application step of applying the coating liquid according to any one of [1] to [7] onto a support to obtain a coating film; and
   a removing step of removing at least a part of the liquid medium from the coating film to obtain a composite material.
[16] A method for producing a composite material, the method including:
   an application step of applying the coating liquid produced by the production method according to any one of [8] to [14] onto a support to obtain a coating film; and
   a removing step of removing at least a part of the liquid medium from the coating film to obtain a composite material.
[17] A composite material which is a dried product of the coating liquid according to any one of [1] to [7].
[18] An article including the composite material according to [17].

### Advantageous Effects of Invention

According to the present invention, provided is a coating liquid having excellent dispersibility of aerogel particles and a binder resin, capable of forming a composite material containing aerogel particles and a binder resin, and having low corrosiveness to metal. Further, according to the present invention, provided is a method for producing the coating liquid and a method for producing a composite material using the coating liquid.

### Description of Embodiments

Hereinafter, preferred embodiments of the present invention will be described in detail. However, the present invention is not limited to the following embodiments. In the present specification, a numerical range indicated using "to" indicates a range including numerical values described before and after "to" as a minimum value and a maximum value, respectively. "A or B" only needs to include either A or B, and may include both A and B. The materials exemplified in the present embodiment can be used alone or in combination of two or more unless otherwise specified.

### [Coating Liquid]

The coating liquid of the present embodiment contains emulsion particles containing a binder resin, aerogel particles, a water-soluble polymer having a hydrophobic group, and a liquid medium. In the present embodiment, the content of chloride ions in the coating liquid is 50 ppm by mass or less, and the content of sulfate ions in the coating liquid is 50 ppm by mass or less.

In the coating liquid of the present embodiment, a binder resin is dispersed as emulsion particles. In the coating liquid of the present embodiment, the dispersibility of the aerogel particles is improved by the water-soluble polymer. Therefore, a uniform composite material containing the aerogel particles and the binder resin can be easily formed by applying and drying the coating liquid of the present embodiment.

In the coating liquid of the present embodiment, the content of chloride ions and sulfate ions is 50 ppm by mass or less. As a result, corrosion of the metal caused by chloride ions and sulfate ions is suppressed.

In the present embodiment, the aerogel particles may form aggregates.

When the aerogel particles form aggregates, the contact interface between the aerogel particles and the resin component (binder resin) is reduced during formation of the composite material, so that permeation of the resin component into pores of the aerogel particles is suppressed, and a composite material having higher heat insulating properties tends to be obtained.

### <Emulsion Particle>

The binder resin may be, for example, a polymer of a monomer component including an ethylenically unsaturated bond. Such a binder resin has a structural unit (also referred to as a monomer unit) derived from a monomer component. Examples of the monomer component include acrylic compounds having a (meth)acryloyl group, aromatic vinyl compounds, heterocyclic vinyl compounds, vinyl esters, monoolefins, conjugated diolefins, α,β-unsaturated carboxylic acids, and vinyl cyanides. These may be used alone or in combination of two or more kinds thereof.

Examples of the acrylic compound include (meth)acrylic acid alkyl esters. The alkyl group of the (meth)acrylic acid alkyl ester may be linear, branched, or cyclic. The number of carbons of the alkyl group of the (meth)acrylic acid alkyl ester may be, for example, 1 to 20, 1 to 18, 1 to 16, or 1 to 14. Examples of the (meth)acrylic acid alkyl ester include methyl (meth)acrylate, ethyl (meth)acrylate, n-butyl (meth)acrylate, 2-ethylhexyl acrylate, isobutyl (meth)acrylate, tert-butyl (meth)acrylate, cyclohexyl (meth)acrylate, lauryl (meth)acrylate, stearyl (meth)acrylate, and isoboronyl (meth)acrylate.

Examples of the acrylic compound include polar group-containing acrylic compounds having a (meth)acryloyl group and a polar group (a polar group other than the (meth)acryloyl group). Examples of the polar group include a hydroxy group, an amino group, a substituted amino group (for example, a dialkylamino group, a hydroxyalkylamino group, and the like), an amide group, a substituted amide group (for example, a dialkylamide group, a hydroxyalkylamide group, and the like), an epoxy group, a silyl group (for example, a trialkoxysilyl group), a cyano group, an isocyanate group, a phosphoric acid group, and a carbonyl group.

Examples of the polar group-containing acrylic compound include a compound in which a polar group is substituted on an alkyl group of a (meth)acrylic acid alkyl ester. Examples of such a compound include hydroxyalkyl (meth)acrylate (for example, hydroxyethyl (meth)acrylate, etc.), dialkylaminoalkyl (meth)acrylate (for example, dimethylaminoethyl (meth)acrylate or the like), glycidyl (meth)acrylate, trialkoxysilylalkyl (meth)acrylate, isocyanatoalkyl (meth)acrylate (for example, 2-isocyanatoethyl (meth)acrylate and the like), and 2-(meth)acryloyloxyethyl acid phosphate.

Examples of the polar group-containing acrylic compound include a compound in which a (meth)acryloyl group and a polar group are bonded. Examples of such a compound include (meth)acrylic acid, (meth)acrylamide, n-methylol (meth)acrylamide, and diacetone acrylamide.

Examples of the polar group-containing acrylic compound include diacetone (meth)acrylate and acetoacetoxyalkyl (meth)acrylate (for example, acetoacetoxyethyl (meth) acrylate).

Examples of the acrylic compound include acrolein and vinyl alkyl ketone (for example, vinyl methyl ketone or the like).

Examples of the aromatic vinyl compound include styrene, α-methylstyrene, p-methylstyrene, and ethylvinylbenzene.

Examples of the heterocyclic vinyl compound include vinylpyrrolidone, vinylfuran, vinylthiophene, vinyloxazoline, and vinylpyrrole.

Examples of the vinyl esters include vinyl acetate, vinyl alkanoate, and vinyl versatate.

Examples of the mono-olefins include ethylene, propylene, butylene, and isobutylene.

Examples of the conjugated diolefins include butadiene, isoprene, and chloroprene.

Examples of the α,β-unsaturated carboxylic acid include crotonic acid, itaconic acid, maleic acid, fumaric acid, and anhydrides thereof.

Examples of vinyl cyanides include acrylonitrile and methacrylonitrile.

From the viewpoint of more remarkably exhibiting the effect of the present invention, the monomer component is preferably a compound selected from the group consisting of an acrylic compound, an aromatic vinyl compound, a heterocyclic vinyl compound, and an α,β-unsaturated carboxylic acid.

The monomer component preferably contains an acrylic compound from the viewpoint of more remarkably exhibiting the effect of the present invention. The content of the acrylic compound may be, for example, 50 mass% or more, 60 mass% or more, 70 mass% or more, 80 mass% or more, 90 mass% or more, or 95 mass% or more, or 100 mass%, based on the total amount of the monomer components.

That is, the content of the acrylic compound may be, for example, 50 to 100 mass%, 60 to 100 mass%, 70 to 100 mass%, 80 to 100 mass%, 90 to 100 mass%, or 95 to 100 mass% based on the total amount of the monomer components.

The acrylic compound preferably contains a (meth)acrylic acid alkyl ester from the viewpoint of more remarkably exhibiting the effect of the present invention. The content of the (meth)acrylic acid alkyl ester may be, for example, 50 mass% or more based on the total amount of the monomer components, and may be 60 mass% or more, 70 mass% or more, 80 mass% or more, or 90 mass% or more from the viewpoint of further improving the water resistance of the composite material. The content of the (meth)acrylic acid alkyl ester may be, for example, 99 mass% or less, 97 mass% or less, or 95 mass% or less, based on the total amount of the monomer components.

That is, the content of the (meth)acrylic acid alkyl ester may be, for example, 50 to 99 mass%, 50 to 97 mass%, 50 to 95 mass%, 60 to 99 mass%, 60 to 97 mass%, 60 to 95 mass%, 70 to 99 mass%, 70 to 97 mass%, 70 to 95 mass%, 80 to 99 mass%, 80 to 97 mass%, 80 to 95 mass%, 90 to 99 mass%, 90 to 97 mass%, 90 to 95 mass%, 50 to 99 mass%, 50 to 97 mass%, or 50 to 95 mass% based on the total amount of the monomer components.

The acrylic compound may further contain a polar group-containing acrylic compound. The content of the polar group-containing acrylic compound may be, for example, 1mass% or more, 3mass% or more, or 5mass% or more, based on the total amount of the monomer components. Further, the content of the polar group-containing acrylic compound may be, for example, 30 mass% or less, 25 mass% or less, 20 mass% or less, 15 mass% or less, or 10 mass% or less based on the total amount of the monomer components.

That is, the content of the polar group-containing acrylic compound may be, for example, 1 to 30 mass%, 1 to 25 mass%, 1 to 20 mass%, 1 to 15 mass%, 1 to 10 mass%, 3 to 30 mass%, 3 to 25 mass%, 3 to 20 mass%, 3 to 15 mass%, 3 to 10 mass%, 5 to 30 mass%, 5 to 25 mass%, 5 to 20 mass%, 5 to 15 mass%, or 5 to 10 mass% based on the total amount of the monomer components.

The monomer component may be selected from the group consisting of, for example, methyl (meth)acrylate, n-butyl (meth)acrylate, 2-ethylhexyl (meth)acrylate, hydroxyethyl (meth)acrylate, (meth)acrylic acid, and styrene.

The monomer component may be appropriately selected so that the glass transition temperature (Tg) of the binder resin falls within a suitable range described later. The glass transition temperature (Tg) of the binder resin can be measured by the method described in Examples described later.

The glass transition temperature (Tg) of the binder resin can be estimated by the FOX equation from the weight ratio of each monomer unit constituting the binder resin and a homopolymer Tg of each monomer. The monomer component may be appropriately selected so that the glass transition temperature (Tg) of the binder resin falls within a suitable range with reference to the numerical value estimated by the FOX equation.

The glass transition temperature (Tg) of the binder resin may be, for example, 25°C or lower, and is preferably 20°C or lower and more preferably 15°C or lower from the viewpoint of further improving the film formability. The glass transition temperature (Tg) of the binder resin is preferably 10°C or lower, more preferably 8°C or lower, and may be 6°C or lower from the viewpoint of further excellent film formability at a low temperature. The lower limit of the glass transition temperature (Tg) of the binder resin is not particularly limited, and may be, for example, -40°C or higher, or -20°C or higher. That is, the glass transition temperature (Tg) of the binder resin may be, for example, -40 to 25°C, -40 to 20°C, -40 to 15°C, -40 to 10°C, -40 to 8°C, -40 to 6°C, -20 to 25°C, -20 to 20°C, -20 to 15°C, -20 to 10°C, -20 to 8°C, or -20 to 6°C.

The binder resin can be produced, for example, by emulsion polymerization of monomer components in a liquid medium (preferably an aqueous solvent) in the presence of an emulsifier. By the emulsion polymerization, emulsion particles containing the binder resin and the emulsifier are formed.

The emulsifier may be any emulsifier capable of emulsifying the binder resin, and may be a known emulsifier. Examples of the emulsifier include anionic emulsifiers and nonionic emulsifiers.

From the viewpoint of easily obtaining a coating liquid having low corrosiveness to metal, the emulsifier is preferably a nonionic emulsifier. It is considered that by selecting a nonionic emulsifier, corrosion of metal caused by ions of other emulsifiers (for example, anionic emulsifiers) is suppressed.

The nonionic emulsifier may be any nonionic emulsifier capable of emulsifying the binder resin, and may be a known nonionic emulsifier. Examples of the nonionic emulsifier include polyoxyalkylene alkyl ether, polyoxyalkylene alkylphenol ether, polyoxyalkylene fatty acid ester, and polyoxyalkylene sorbitan fatty acid ester, and polyoxyalkylene alkyl ether is preferable, and polyoxyethylene alkyl ether is more preferable.

The HLB value of the emulsifier is preferably 13 or more, more preferably 14 or more from the viewpoint of more easily emulsifying the binder resin, and is preferably 15 or more, more preferably 16 or more from the viewpoint of further improving the film formability of the coating liquid. The HLB value of the emulsifier is preferably 19 or less from the viewpoint of preventing a decrease in water resistance of the composite material.

That is, the HLB value of the emulsifier may be, for example, 13 to 19, 14 to 19, 15 to 19, or 16 to 19.

The content of the emulsifier may be, for example, 0.01 parts by mass or more with respect to 100 parts by mass of the binder resin, and may be 0.1 parts by mass or more, 0.3 parts by mass or more, 0.5 parts by mass or more, 0.7 parts by mass or more, 0.9 parts by mass or more, or 1 part by mass or more from the viewpoint of delaying the surface drying of the coating film to improve the film formability and the core dryness. The content of the emulsifier may be, for example, 15 parts by mass or less with respect to 100 parts by mass of the binder resin, and may be 12 parts by mass or less, 10 parts by mass or less, 8 parts by mass or less, or 6 parts by mass or less from the viewpoint of further improving the water resistance of the composite material.

That is, the content of the emulsifier may be, for example, 0.01 to 15 parts by mass, 0.01 to 12 parts by mass, 0.01 to 10 parts by mass, 0.01 to 8 parts by mass, 0.01 to 6 parts by mass, 0.1 to 15 parts by mass, 0.1 to 12 parts by mass, 0.1 to 10 parts by mass, 0.1 to 8 parts by mass, 0.1 to 6 parts by mass, 0.3 to 15 parts by mass, 0.3 to 12 parts by mass, 0.3 to 10 parts by mass, 0.3 to 8 parts by mass, 0.3 to 6 parts by mass, 0.5 to 15 parts by mass, 0.5 to 12 parts by mass, 0.5 to 10 parts by mass, 0.5 to 8 parts by mass, 0.5 to 6 parts by mass, 0.7 to 15 parts by mass, 0.7 to 12 parts by mass, 0.7 to 10 parts by mass, 0.7 to 8 parts by mass, 0.7 to 6 parts by mass, 0.9 to 15 parts by mass, 0.9 to 12 parts by mass, 0.9 to 10 parts by mass, 0.9 to 8 parts by mass, 0.9 to 6 parts by mass, 1 to 15 parts by mass, 1 to 12 parts by mass, 1 to 10 parts by mass, 1 to 8 parts by mass, or 1 to 6 parts by mass with respect to 100 parts by mass of the binder resin.

The average particle diameter of the emulsion particles may be, for example, 50 nm or more, 70 nm or more, 90 nm or more, or 100 nm or more. Further, the average particle diameter of the emulsion particles may be, for example, 400 nm or less, 350 nm or less, or 300 nm or less.

That is, the average particle diameter of the emulsion particles may be, for example, 50 to 400 nm, 50 to 350 nm, 50 to 300 nm, 70 to 400 nm, 70 to 350 nm, 70 to 300 nm, 90 to 400 nm, 90 to 350 nm, 90 to 300 nm, 100 to 400 nm, 100 to 350 nm, or 100 to 300 nm.

The content of the emulsion particles in the coating liquid may be, for example, 30 mass% or more, 35 mass% or more, 40 mass% or more, or 45 mass% or more based on the total amount of the nonvolatile components in the coating liquid. The content of the emulsion particles in the coating liquid may be, for example, 80 mass% or less, 75 mass% or less, or 70 mass% or less based on the total amount of the nonvolatile components in the coating liquid.

The content of the emulsion particles in the coating liquid may be, for example, 30 to 80 mass%, 30 to 75 mass%, 30 to 70 mass%, 35 to 80 mass%, 35 to 75 mass%, 35 to 70 mass%, 40 to 80 mass%, 40 to 75 mass%, 40 to 70 mass%, 45 to 80 mass%, 45 to 75 mass%, or 45 to 70 mass% based on the total amount of the nonvolatile components in the coating liquid.

The content of the emulsion particles in the coating liquid may be appropriately adjusted so that the content of the binder resin and the emulsifier in the composite material falls within a suitable range described later.

### <Water-Soluble Polymer>

The water-soluble polymer may have a hydrophobic group and water solubility.

Examples of the hydrophobic group include an alkyl group (preferably, a long-chain alkyl group having 6 to 26 carbons), an ester group, an alkoxy group, and halogen. Among them, the hydrophobic group is preferably an alkyl group, more preferably a long-chain alkyl group having 6 to 26 carbons, further preferably a long-chain alkyl group having 8 to 26 carbons, still more preferably a long-chain alkyl group having 10 to 26 carbons, and may be a long-chain alkyl group having 12 to 26 carbons or a long-chain alkyl group having 15 to 26 carbons.

Examples of the water-soluble polymer include a modified carboxyl vinyl polymer, a modified polyether urethane, a cellulose-based resin, polyethylene oxide, polyvinyl alcohol, a polyacrylate, polyvinyl pyrrolidone, a dextrin-based resin, a chitin-based resin, and a chitosan-based resin.

As the water-soluble polymer, a cellulose-based resin can be suitably used. Examples of the cellulose-based resin include methyl cellulose, carboxymethyl cellulose, hydroxyethyl cellulose, hydroxypropyl methyl cellulose, and modified products obtained by further modifying (for example, hydrophobization) the above.

As the cellulose-based resin, a cellulose-based resin having an alkyl group is preferable, and a cellulose-based resin having a long-chain alkyl group having 6 to 26 carbons is more preferable. According to such a cellulose-based resin, the effect of the present invention is more remarkably exhibited. The number of carbons in the long-chain alkyl group is preferably 6 to 26, more preferably 8 to 26, still more preferably 10 to 26, still more preferably 12 to 26, and still more preferably 15 to 26.

In the cellulose-based resin, the content of the long-chain alkyl group having 6 to 26 carbon atoms is preferably 0.01 to 5 mass%, and more preferably 0.01 to 3 mass%, based on the total amount of the cellulose-based resin.

As the cellulose-based resin, for example, a cellulose-based resin having a structural unit represented by the following formula (A-1) is preferable.

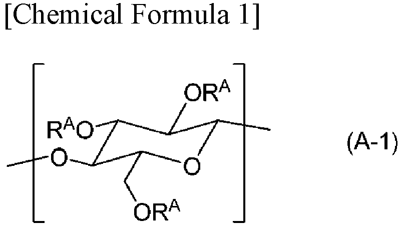

In Formula (A-1), R^{A} represents a hydrogen atom, an alkyl group, a hydroxyalkyl group, a group represented by -R^{A1}-O-R^{A2} (R^{A1} represents an alkanediyl group or a hydroxyalkanediyl group, and R^{A2} represents an alkyl group.), or a group represented by -(R^{A3}O)ₙH (R^{A3} represents an alkanediyl group, and n represents an integer of 2 or more.). The three R^{A} may be the same or different from each other. However, at least one of the three R^{A}s is an alkyl group or a group represented by -R^{A1}-O-R^{A2}.

In Formula (A-1), the alkyl group in R^{A} is preferably an alkyl group having 1 to 26 carbons. The alkyl group in R^{A} is more preferably a short-chain alkyl group having 1 to 3 carbons or a long-chain alkyl group having 6 to 26 carbons. The number of carbons in the long-chain alkyl group is preferably 8 to 26, more preferably 10 to 26, still more preferably 12 to 26, and yet still more preferably 15 to 26.

In Formula (A-1), the hydroxyalkyl group in R^{A} is preferably a hydroxyalkyl group having 1 to 26 carbons, more preferably a hydroxyalkyl group having 1 to 10 carbons, and still more preferably a hydroxyalkyl group having 1 to 5 carbons.

In Formula (A-1), the alkanediyl group in R^{A1} is preferably an alkanediyl group having 1 to 26 carbons, more preferably an alkanediyl group having 1 to 10 carbons, and still more preferably an alkanediyl group having 1 to 5 carbons. Further, the hydroxyalkanediyl group in R^{A1} is preferably a hydroxyalkanediyl group having 1 to 26 carbons, more preferably a hydroxyalkanediyl group having 1 to 10 carbons, and still more preferably a hydroxyalkanediyl group having 1 to 5 carbons.

In Formula (A-1), R^{A2} is preferably an alkyl group having 1 to 26 carbons. Further, the alkyl group in R^{A2} is more preferably a short-chain alkyl group having 1 to 3 carbons or a long-chain alkyl group having 6 to 26 carbons, and more preferably a long-chain alkyl group. The number of carbons in the long-chain alkyl group is preferably 8 to 26, more preferably 10 to 26, still more preferably 12 to 26, and yet still more preferably 15 to 26.

In Formula (A-1), R^{A3} is preferably an alkanediyl group having 2 to 3 carbons, and more preferably an alkanediyl group having 3 carbons.

In Formula (A-1), it is preferable that at least one of the three R^{A}s is a long-chain alkyl group, or at least one of the three R^{A}s is a group represented by -R^{A1}-O-R^{A2}, and R^{A2} is a long-chain alkyl group.

The content of the water-soluble polymer in the coating liquid may be, for example, 0.03 mass% or more based on the total amount of the nonvolatile components in the coating liquid, and may be 0.05 mass% or more from the viewpoint of further improving the dispersibility of the aerogel particles. In addition, the content of the water-soluble polymer in the coating liquid may be, for example, 6 mass% or less based on the total amount of the nonvolatile components in the coating liquid, and may be 5 mass% or less, 4 mass% or less, 3 mass% or less, or 2 mass% or less from the viewpoint of further improving the water resistance of the composite material.

That is, the content of the water-soluble polymer in the coating liquid may be, for example, 0.03 to 5 mass%, 0.03 to 4 mass%, 0.03 to 3 mass%, 0.03 to 2 mass%, 0.05 to 5 mass%, 0.05 to 4 mass%, 0.05 to 3 mass%, or 0.05 to 2 mass% based on the total amount of the nonvolatile components in the coating liquid.

The content of the water-soluble polymer in the coating liquid may be, for example, 0.1 parts by mass or more with respect to 100 parts by mass of the aerogel particles, and may be 0.5 parts by mass or more, 1 part by mass or more, 2 parts by mass or more, or 3 parts by mass or more from the viewpoint of further improving the dispersibility of the aerogel particles. The content of the water-soluble polymer in the coating liquid may be, for example, 20 parts by mass or less, 15 parts by mass or less, or 10 parts by mass or less with respect to 100 parts by mass of the aerogel particles from the viewpoint of further improving the water resistance of the composite material. That is, the content of the water-soluble polymer in the coating liquid may be, for example, 0.1 to 20 parts by mass, 0.1 to 15 parts by mass, 0.1 to 10 parts by mass, 0.5 to 20 parts by mass, 0.5 to 15 parts by mass, 0.5 to 10 parts by mass, 1 to 20 parts by mass, 1 to 15 parts by mass, 1 to 10 parts by mass, 2 to 20 parts by mass, 2 to 15 parts by mass, 2 to 10 parts by mass, 3 to 20 parts by mass, 3 to 15 parts by mass, or 3 to 10 parts by mass with respect to 100 parts by mass of the aerogel particles.

The content of the water-soluble polymer in the coating liquid may be appropriately adjusted so that the content of the water-soluble polymer in the composite material falls within a suitable range described later.

### <Aerogel>

In the present embodiment, the term "aerogel" means "gel comprised of a microporous solid in which the dispersed phase is a gas", which is aerogel in a broad sense.

The aerogel of the present embodiment is, for example, a silica aerogel containing silica as a main component. Examples of the silica aerogel include so-called organic-inorganic hybridized silica aerogels into which an organic group (methyl group or the like) or an organic chain is introduced.

Examples of the aerogel of the present embodiment include the following aspects. By adopting each aspect, an aerogel having heat insulating properties, flame retardancy, heat resistance, and flexibility according to each aspect can be obtained.

### (First Aspect)

The aerogel of the present embodiment can have a structure represented by the following general formula (1). The aerogel according to the present embodiment can have a structure represented by the following general formula (1a) as a structure including a structure represented by the formula (1).

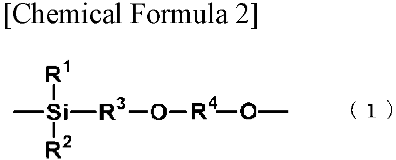

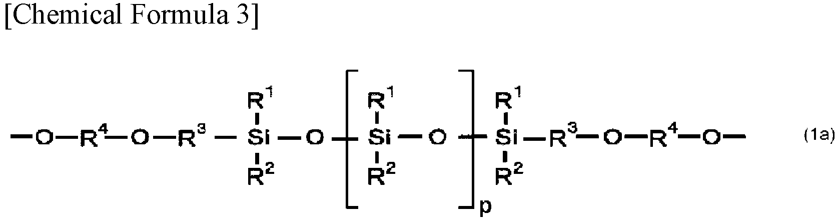

**In** Formula (1) and the formula (1a), R¹ and R² each independently represent an alkyl group or an aryl group, and R³ and R⁴ each independently represent an alkylene group. Here, examples of the aryl group include a phenyl group and a substituted phenyl group. Examples of the substituent of the substituted phenyl group include an alkyl group, a vinyl group, a mercapto group, an amino group, a nitro group, and a cyano group. p represents an integer of 1 to 50. **In** Formula (1a), two or more R¹ may be the same or different, and similarly, two or more R² may be the same or different. In Formula (1a), two R³ may be the same or different, and similarly, two R⁴ may be the same or different.

By introducing the structure represented by Formula (1) or Formula (1a) as an aerogel component into the skeleton of the aerogel, an aerogel having low thermal conductivity and flexibility is obtained. From such a viewpoint, in Formula (1) and Formula (1a), R¹ and R² each independently include an alkyl group having 1 to 6 carbons, a phenyl group, and the like, and the alkyl group includes a methyl group and the like. Also, in Formula (1) and Formula (1a), R³ and R⁴ each independently include an alkylene group having 1 to 6 carbons, and examples of the alkylene group include an ethylene group and a propylene group. In Formula (1a), p can be 2 to 30 and may be 5 to 20.

### (Second Aspect)

The aerogel of the present embodiment can have a ladder type structure including a strut and a bridge, and the bridge can have a structure represented by the following general Formula (2). By introducing such a ladder type structure as an aerogel component into the skeleton of the aerogel, heat resistance and mechanical strength can be improved. In the present embodiment, the "ladder type structure" is a structure having two struts and bridges connecting the struts (having a form of a so-called "ladder"). In this aspect, the skeleton of the aerogel may have a ladder type structure, or the aerogel may partially have a ladder type structure.

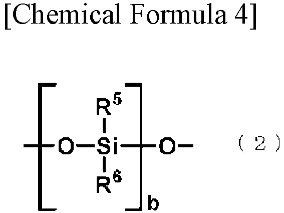

In Formula (2), R⁵ and R⁶ each independently represent an alkyl group or an aryl group, and b represents an integer of 1 to 50. Here, examples of the aryl group include a phenyl group and a substituted phenyl group. In addition, examples of the substituent of the substituted phenyl group include an alkyl group, a vinyl group, a mercapto group, an amino group, a nitro group, and a cyano group. In Formula (2), when b is an integer of 2 or more, two or more R⁵ may be the same or different, and similarly two or more R⁶ may be the same or different.

By introducing the above structure into the skeleton of the aerogel as an aerogel component, for example, an aerogel having more excellent flexibility than an aerogel having a structure derived from conventional ladder type silsesquioxane is obtained.

The structure serving as the strut, the chain length thereof, and the interval between the structures serving as the bridges are not particularly limited, but from the viewpoint of further improving the heat resistance and the mechanical strength, the ladder type structure may have a ladder type structure represented by the following general formula (3).

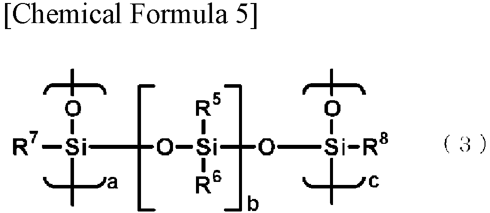

In Formula (3), R⁵, R⁶, R⁷, and R⁸ each independently represent an alkyl group or an aryl group, a and c each independently represent an integer of 1 to 3000, and b represents an integer of 1 to 50. Here, examples of the aryl group include a phenyl group and a substituted phenyl group. In addition, examples of the substituent of the substituted phenyl group include an alkyl group, a vinyl group, a mercapto group, an amino group, a nitro group, and a cyano group. In Formula (3), when b is an integer of 2 or more, two or more R⁵ may be the same or different, and similarly two or more R⁶ may be the same or different. Further, in formula (3), when a is an integer of 2 or more, two or more R⁷ may be the same or different, and similarly, when c is an integer of 2 or more, two or more R⁸ may be the same or different.

From the viewpoint of obtaining more excellent flexibility, examples of R⁵, R⁶, R⁷, and R⁸ (provided that R⁷ and R⁸ are in Formula (3) only) in Formulae (2) and (3) each independently include an alkyl group having 1 to 6 carbons and a phenyl group, and examples of the alkyl group include a methyl group. In Formula (3), a and c can be each independently 6 to 2000, but may be 10 to 1000. In Formulae (2) and (3), b can be 2 to 30, but may be 5 to 20.

### (Third Aspect)

The aerogel of the present embodiment may be a dried product (obtained by drying a wet gel produced from the sol) of a wet gel which is a condensate of a sol containing at least one selected from the group consisting of a silicon compound having a hydrolyzable functional group or a condensable functional group and a hydrolysis product of a silicon compound having a hydrolyzable functional group. The aerogel described so far may also be obtained by drying a wet gel produced from a sol containing a silicon compound or the like as described above.

As the silicon compound having a hydrolyzable functional group or a condensable functional group, a polysiloxane compound can be used. That is, the sol can contain at least one compound (hereinafter, sometimes referred to as a "polysiloxane compound group") selected from the group consisting of a polysiloxane compound having a hydrolyzable functional group or a condensable functional group and a hydrolysis product of a polysiloxane compound having a hydrolyzable functional group.

The functional group in the polysiloxane compound is not particularly limited, but may be a group that reacts with the same functional group or a group that reacts with another functional group. Examples of the hydrolyzable functional group include an alkoxy group. Examples of the condensable functional group include a hydroxyl group, a silanol group, a carboxyl group, and a phenolic hydroxyl group. The hydroxyl group may be contained in a hydroxyl group-containing group such as a hydroxyalkyl group. The polysiloxane compound having a hydrolyzable functional group or a condensable functional group may further have a reactive group (a functional group that does not correspond to the hydrolyzable functional group and the condensable functional group) different from the hydrolyzable functional group and the condensable functional group. Examples of the reactive group include an epoxy group, a mercapto group, a glycidoxy group, a vinyl group, an acryloyl group, a methacryloyl group, and an amino group. The epoxy group may be contained in an epoxy group-containing group such as a glycidoxy group. These polysiloxane compounds having a functional group and a reactive group may be used alone or in combination of two or more kinds thereof. Among these functional groups and reactive groups, examples of the group that improves the flexibility of the aerogel include an alkoxy group, a silanol group, and a hydroxyalkyl group, and among these groups, the alkoxy group and the hydroxyalkyl group can further improve the compatibility of the sol. From the viewpoint of improving the reactivity of the polysiloxane compound and reducing the thermal conductivity of the aerogel, the number of carbons in the alkoxy group and the hydroxyalkyl group can be 1 to 6, but from the viewpoint of further improving the flexibility of the aerogel, the number of carbons may be 2 to 5 or 2 to 4.

### (Fourth Aspect)

The aerogel according to the present embodiment may further contain silica particles in addition to the aerogel component from the viewpoint of further toughening and achieving further excellent heat insulating properties and flexibility. An aerogel containing an aerogel component and silica particles can also be referred to as an aerogel composite. It is considered that the aerogel composite has a cluster structure, which is a characteristic of the aerogel, and has a three-dimensionally fine porous structure while the aerogel component and the silica particles are combined.

The aerogel containing the aerogel component and the silica particles can be said to be a dried product of a wet gel which is a condensate of a sol containing silica particles and at least one selected from the group consisting of a silicon compound having a hydrolyzable functional group or a condensable functional group and a hydrolysis product of a silicon compound having a hydrolyzable functional group. Therefore, the description regarding the first to third aspects can be appropriately applied to the aerogel according to the present embodiment.

The silica particles can be used without particular limitation, and examples thereof include amorphous silica particles. Examples of the amorphous silica particles include fused silica particles, fumed silica particles, and colloidal silica particles. Among them, the colloidal silica particles have high monodispersibility and easily suppress aggregation in the sol. The silica particles may be silica particles having a hollow structure, a porous structure, or the like.

The shape of the silica particles is not particularly limited, and examples thereof include a spherical shape, a cocoon shape, and an association type. Among them, by using spherical particles as the silica particles, aggregation in the sol is easily suppressed. The average primary particle diameter of the silica particles may be 1 nm or more, 5 nm or more, or 20 nm or more from the viewpoint of easily imparting appropriate strength and flexibility to the aerogel and easily obtaining an aerogel excellent in shrinkage resistance during drying. The average primary particle diameter of the silica particles may be 500 nm or less, 300 nm or less, or 100 nm or less from the viewpoint of easily suppressing solid thermal conduction of the silica particles and easily obtaining an aerogel excellent in heat insulating properties. From these viewpoints, the average primary particle diameter of the silica particles may be 1 to 500 nm, 5 to 300 nm, or 20 to 100 nm.

In the present embodiment, the average particle size of the aerogel component and the average primary particle size of the silica particles can be obtained by directly observing the aerogel using a scanning electron microscope (hereinafter, abbreviated as "SEM"). The "diameter" as used herein means the diameter when the cross section of the particles exposed in the cross section of the aerogel is regarded as a circle. Also, the "diameter when the cross section is regarded as a circle" is a diameter of a perfect circle when the area of the cross section is replaced with a perfect circle having the same area. In the calculation of the average particle diameter, the diameters of circles are obtained for 100 particles, and the average thereof is taken.

The average particle diameter of the silica particles can also be measured from a raw material. For example, the biaxial average primary particle diameter is calculated as follows from the results of observing any 20 particles by SEM. That is, taking colloidal silica particles usually having a solid content concentration of about 5 to 40 mass% and dispersed in water as an example, chips obtained by cutting a wafer with pattern wiring into a 2 cm square are immersed in a dispersion of colloidal silica particles for about 30 seconds, then the chips are rinsed with pure water for about 30 seconds, and dried by nitrogen blow. Thereafter, the chip is placed on a sample stage for SEM observation, applied with an acceleration voltage of 10 kV, the silica particles are observed at a magnification of 100,000 times, and an image is photographed. 20 silica particles are arbitrarily selected from the obtained image, and the average of the particle diameters of these particles is taken as the average particle diameter.

### <Aerogel Particles>

The aerogel particles in the present embodiment can be obtained, for example, by pulverizing a bulk aerogel as described later.

The average particle size (D50) (also referred to as an average diameter) of the aerogel particles can be 0.1 to 1000 µm, but may be 0.5 to 700 µm, 1 to 500 µm, 3 to 100 µm, or 5 to 50 µm. When the average particle diameter (D50) of the aerogel particles is large, it is easy to obtain aerogel particles excellent in dispersibility, handleability, and the like. On the other hand, when the average particle diameter (D50) is small, it is easy to obtain aerogel particles excellent in dispersibility. The average particle size (D50) of the aerogel particles can be appropriately adjusted by a pulverization method and pulverization conditions, a sieve, a classification method, and the like.

The average particle size (D50) of the aerogel particles can be measured by a laser diffraction/scattering method. For example, the aerogel particles are added to a solvent (ethanol) so that the content of the aerogel particles is 0.05 to 5 mass%, and the mixture is vibrated with a 50 W ultrasonic homogenizer for 15 to 30 minutes to disperse the aerogel particles. Thereafter, about 10 mL of the dispersion is injected into a laser diffraction/scattering particle diameter distribution measuring device, and the particle diameter is measured at 25°C with a refractive index of 1.3 and an absorption of 0. The particle diameter at an integrated value of 50% (volume basis) in the particle diameter distribution is defined as an average particle diameter D50. As the measuring device, for example, Microtrac MT3000 (Product name, manufactured by NIKKISO CO., LTD.) can be used.

As the aerogel particles, commercially available products can also be used. Examples of commercially available products of the aerogel particles include ENOVAMT1100 (manufactured by Cabot Corporation) and Aero Va (manufactured by JIOS AEROGEL CORPORATION).

In the present embodiment, the amount of the aerogel particles in the coating liquid is an amount in which the content of the aerogel particles in the composite material is preferably 70 vol% or more, more preferably 72 vol% or more, and still more preferably 74 vol% or more, based on the total volume of the composite material. In addition, the amount of the aerogel particles in the coating liquid may be such an amount that the content of the aerogel particles in the composite material is, for example, 99 vol% or less, 98 vol% or less, or 97 vol% or less based on the total volume of the composite material. That is, the amount of the aerogel particles in the coating liquid may be an amount such that the content of the aerogel particles in the composite material is 70 to 99 vol%, 70 to 98 vol%, 70 to 97 vol%, 72 to 99 vol%, 72 to 98 vol%, 72 to 97 vol%, 74 to 99 vol%, 74 to 98 vol%, or 74 to 97 vol% based on the total volume of the composite material.

### <Method for Producing Aerogel Particles>

The method for producing the aerogel particles is not particularly limited, but for example, the aerogel particles can be produced by the following method.

The aerogel particles of the present embodiment can be manufactured by a manufacturing method mainly including a sol generation step, a wet gel generation step of gelling the sol obtained in the sol generation step and then aging to obtain a wet gel, a washing and solvent substitution step of washing the wet gel obtained in the wet gel generation step and (if necessary) substituting the solvent, a drying step of drying the washed and solvent-substituted wet gel, and a pulverization step of pulverizing the aerogel obtained by drying.

In addition, it may be manufactured by a manufacturing method mainly including a sol generation step, a wet gel generation step, a wet gel pulverization step of pulverizing the wet gel obtained in the wet gel generation step, a washing and solvent substitution step, and a drying step.

The obtained aerogel particles can be further sized by sieving, classification, or the like. The dispersibility can be enhanced by adjusting the size of the particles. The "sol" means a state before a gelation reaction occurs, and in the present embodiment, means a state in which the silicon compound and the silica particles in some cases are dissolved or dispersed in a solvent. The wet gel means a wet gel solid containing a liquid medium but having no fluidity.

### (Sol Generation Step)

The sol generation step is a step of mixing a silicon compound and optionally silica particles (which may be a solvent containing silica particles) to perform a hydrolysis reaction, and then generating a sol. In this step, in order to promote the hydrolysis reaction, an acid catalyst may be further added to the solvent. As disclosed in Japanese Patent No. 5250900, a surfactant, a thermally hydrolyzable compound, or the like may be added to the solvent. Furthermore, for the purpose of suppressing heat ray radiation or the like, a component such as carbon graphite, an aluminum compound, a magnesium compound, a silver compound, or a titanium compound may be added to the solvent.

As the solvent, for example, water or a mixed solution of water and alcohol can be used. Examples of the alcohol include methanol, ethanol, n-propanol, 2-propanol, n-butanol, 2-butanol, and t-butanol. Among them, from the viewpoint of reducing the interfacial tension with the gel wall, examples of the alcohol having a low surface tension and a low boiling point include methanol, ethanol, and 2-propanol. These may be used alone or in combination of two or more kinds thereof.

For example, when an alcohol is used as the solvent, the amount of the alcohol can be 4 to 8 mol, but may be 4 to 6.5 mol or 4.5 to 6 mol, with respect to 1 mol of the total amount of the silicon compound group and the polysiloxane compound group. When the amount of the alcohol is 4 mol or more, good compatibility is more easily obtained, and when the amount of the alcohol is 8 mol or less, shrinkage of the gel is more easily suppressed.

Examples of the acid catalyst include inorganic acids such as hydrofluoric acid, hydrochloric acid, nitric acid, sulfuric acid, sulfurous acid, phosphoric acid, phosphorous acid, hypophosphorous acid, bromic acid, chloric acid, chlorous acid, and hypochlorous acid; acidic phosphates such as acidic aluminum phosphate, acidic magnesium phosphate, and acidic zinc phosphate; organic carboxylic acids such as acetic acid, formic acid, propionic acid, oxalic acid, malonic acid, succinic acid, citric acid, malic acid, adipic acid, and azelaic acid. Among them, examples of the acid catalyst for further improving the water resistance of the resulting aerogel include organic carboxylic acids. Examples of the organic carboxylic acid include acetic acid, but may be formic acid, propionic acid, oxalic acid, or malonic acid. These may be used alone or in combination of two or more kinds thereof.

By using the acid catalyst, the hydrolysis reaction of the silicon compound can be promoted to obtain a sol in a shorter time.

The addition amount of the acid catalyst can be 0.001 to 0.1 parts by mass with respect to 100 parts by mass of the total amount of the polysiloxane compound group and the silicon compound group.

As the surfactant, a nonionic surfactant, an ionic surfactant, or the like can be used. These may be used alone or in combination of two or more kinds thereof.

As the nonionic surfactant, for example, a compound containing a hydrophilic portion such as polyoxyethylene and a hydrophobic portion mainly composed of an alkyl group, a compound containing a hydrophilic portion such as polyoxypropylene, and the like can be used. Examples of the compound containing a hydrophilic portion such as polyoxyethylene and a hydrophobic portion mainly composed of an alkyl group include polyoxyethylene nonylphenyl ether, polyoxyethylene octylphenyl ether, and polyoxyethylene alkyl ether. Examples of the compound containing a hydrophilic portion such as polyoxypropylene include polyoxypropylene alkyl ether and a block copolymer of polyoxyethylene and polyoxypropylene.

Examples of the ionic surfactant include a cationic surfactant, an anionic surfactant, and an amphoteric surfactant. Examples of the cationic surfactant include cetyltrimethylammonium bromide and cetyltrimethylammonium chloride, and examples of the anionic surfactant include sodium dodecylsulfonate. Examples of the amphoteric surfactant include amino acid surfactants, betaine surfactants, and amine oxide surfactants. Examples of the amino acid surfactant include acylglutamic acid. Examples of the betaine surfactant include lauryldimethylaminoacetic acid betaine and stearyldimethylaminoacetic acid betaine. Examples of the amine oxide surfactant include lauryldimethylamine oxide.

These surfactants are considered to have an action of reducing the difference in chemical affinity between the solvent in the reaction system and the growing siloxane polymer and suppressing phase separation in the wet gel generation step described later.

The addition amount of the surfactant depends on the type of the surfactant or the type and amount of the silicon compound, but can be, for example, 1 to 100 parts by mass with respect to 100 parts by mass of the total amount of the polysiloxane compound group and the silicon compound group. The addition amount may be 5 to 60 parts by mass.

It is considered that the thermally hydrolyzable compound generates a base catalyst by thermal hydrolysis, makes the reaction solution basic, and accelerates the sol-gel reaction in the wet gel generation step described later. Therefore, the thermally hydrolyzable compound is not particularly limited as long as it is a compound capable of making the reaction solution basic after hydrolysis, and examples thereof include acid amide such as formamide, N-methylformamide, N,N-dimethylformamide, acetamide, N-methylacetamide, and N,N-dimethylacetamide; cyclic nitrogen compounds such as hexamethylenetetramine. Among them, urea is particularly likely to obtain the promoting effect.

The addition amount of the thermally hydrolyzable compound is not particularly limited as long as it is an amount that can sufficiently promote the sol-gel reaction in the wet gel generation step described later. For example, when urea is used as the thermally hydrolyzable compound, the addition amount thereof can be 1 to 200 parts by mass with respect to 100 parts by mass of the total amount of the polysiloxane compound group and the silicon compound group. The addition amount may be 2 to 150 parts by mass. When the addition amount is 1 part by mass or more, good reactivity is more easily obtained, and when the addition amount is 200 parts by mass or less, precipitation of crystals and a decrease in gel density are more easily suppressed.

The hydrolysis in the sol generation step also depends on the type and amount of the silicon compound, the silica particles, the acid catalyst, the surfactant, and the like in the mixed liquid, but for example, the hydrolysis may be performed under a temperature environment of 20 to 60°C for 10 minutes to 24 hours, or may be performed under a temperature environment of 50 to 60°C for 5 minutes to 8 hours. As a result, the hydrolyzable functional group in the silicon compound is sufficiently hydrolyzed, and a hydrolysis product of the silicon compound can be obtained more reliably.

However, when the thermally hydrolyzable compound is added to the solvent, the temperature environment of the sol generation step may be adjusted to a temperature at which hydrolysis of the thermally hydrolyzable compound is suppressed and gelation of the sol is suppressed. The temperature at this time may be any temperature as long as hydrolysis of the thermally hydrolyzable compound can be suppressed. For example, when urea is used as the thermally hydrolyzable compound, the temperature environment of the sol generation step can be 0 to 40°C, but may be 10 to 30°C.

### (Wet Gel Generation Step)

The wet gel generation step is a step of gelling the sol obtained in the sol generation step, and then aging the sol to obtain a wet gel. In this step, a base catalyst can be used to promote gelation.

Examples of the base catalyst include carbonates such as calcium carbonate, potassium carbonate, sodium carbonate, barium carbonate, magnesium carbonate, lithium carbonate, ammonium carbonate, copper (II) carbonate, iron (II) carbonate, and silver (I) carbonate; bicarbonates such as calcium hydrogen carbonate, potassium hydrogen carbonate, sodium hydrogen carbonate, and ammonium hydrogen carbonate; alkali metal hydroxides such as lithium hydroxide, sodium hydroxide, potassium hydroxide, and cesium hydroxide; ammonium compounds such as ammonium hydroxide, ammonium fluoride, ammonium chloride, and ammonium bromide; basic sodium phosphate salts such as sodium metaphosphate, sodium pyrophosphate, and sodium polyphosphate; aliphatic amines such as allylamine, diallylamine, triallylamine, isopropylamine, diisopropylamine, ethylamine, diethylamine, triethylamine, 2-ethylhexylamine, 3-ethoxypropylamine, diisobutylamine, 3-(diethylamino)propylamine, di-2-ethylhexylamine, 3-(dibutylamino)propylamine, tetramethylethylenediamine, t-butylamine, sec-butylamine, propylamine, 3-(methylamino)propylamine, 3-(dimethylamino) propylamine, 3-methoxyamine, dimethylethanolamine, methyldiethanolamine, diethanolamine, and triethanolamine; and nitrogen-containing heterocyclic compounds such as morpholine, N-methylmorpholine, 2-methylmorpholine, piperazine and derivatives thereof, piperidine and derivatives thereof, imidazole and derivatives thereof. Among them, ammonium hydroxide (ammonia water) is excellent in terms of high volatility and difficulty in remaining in the aerogel particles after drying, so that water resistance is hardly impaired, and further in terms of economic efficiency. The above-mentioned base catalyst may be used alone or in combination of two or more kinds thereof.

By using the base catalyst, the dehydration condensation reaction or the dealcoholization condensation reaction of the silicon compound in the sol and the silica particles can be promoted, and the sol can be gelled in a shorter time. In addition, this makes it possible to obtain a wet gel having higher strength (rigidity). In particular, since ammonia has high volatility and is less likely to remain in the aerogel particles, it is possible to obtain aerogel particles having more excellent water resistance by using ammonia as a base catalyst.

The addition amount of the base catalyst can be 0.5 to 5 parts by mass, but may be 1 to 4 parts by mass, with respect to 100 parts by mass of the total amount of the polysiloxane compound group and the silicon compound group. When the content is 0.5 parts by mass or more, gelation can be performed in a shorter time, and when the content is 5 parts by mass or less, deterioration of water resistance can be further suppressed.

The gelation of the sol in the wet gel generation step may be performed in a sealed container so that the solvent and the base catalyst are not volatilized. The gelation temperature can be 30 to 90°C, but may be 40 to 80°C. By setting the gelation temperature to 30°C or higher, gelation can be performed in a shorter time, and a wet gel having higher strength (rigidity) can be obtained. In addition, by setting the gelation temperature to 90°C or lower, volatilization of the solvent (particularly, alcohol) is easily suppressed, so that gelation can be performed while volume shrinkage is suppressed.

The aging in the wet gel generation step may be performed in a sealed container so that the solvent and the base catalyst are not volatilized. By aging, the bonding of the components constituting the wet gel is strengthened, and as a result, a wet gel having high strength (rigidity) sufficient to suppress shrinkage during drying can be obtained. The aging temperature can be 30 to 90°C, but may be 40 to 80°C. By setting the aging temperature to 30°C or higher, a wet gel having higher strength (rigidity) can be obtained, and by setting the aging temperature to 90°C or lower, volatilization of a solvent (particularly alcohol) can be easily suppressed, so that gelation can be performed while volume shrinkage is suppressed.

Since it is often difficult to determine the end time point of gelation of the sol, gelation of the sol and subsequent aging may be continuously performed by a series of operations.

The gelation time and the aging time can be appropriately set according to the gelation temperature and the aging temperature. When the silica particles are contained in the sol, the gelation time can be particularly shortened as compared with the case where the silica particles are not contained. The reason for this is presumed to be that the silanol group or the reactive group of the silicon compound in the sol forms a hydrogen bond or a chemical bond with the silanol group of the silica particles. The gelation time can be 10 to 120 minutes, but may be 20 to 90 minutes. By setting the gelation time to 10 minutes or more, a homogeneous wet gel can be easily obtained, and by setting the gelation time to 120 minutes or less, it is possible to simplify the washing and solvent substitution step to the drying step described later. Note that the total time of the gelation time and the aging time can be 4 to 480 hours as the entire gelation and aging steps, but may be 6 to 120 hours. By setting the total of the gelation time and the aging time to 4 hours or more, a wet gel having higher strength (rigidity) can be obtained, and by setting the total of the gelation time and the aging time to 480 hours or less, the effect of aging is more easily maintained.

In order to lower the density of the resulting aerogel particles and increase the average pore diameter, the gelation temperature and the aging temperature may be increased within the above ranges, or the total time of the gelation time and the aging time may be increased within the above ranges. Also, in order to increase the density of the resulting aerogel particles and reduce the average pore diameter, the gelation temperature and the aging temperature may be lowered within the above ranges, or the total time of the gelation time and the aging time may be shortened within the above ranges.

### (Wet Gel Pulverization Step)

When the wet gel pulverization step is performed, the wet gel obtained in the wet gel generation step is pulverized. The pulverization can be performed, for example, by placing a wet gel in a Henschal-type mixer or performing a wet gel generation step in the mixer and operating the mixer under appropriate conditions (rotation speed and time). In addition, more simply, it can be performed by placing the wet gel in a sealable container or performing the wet gel generation step in a sealable container and shaking the container for an appropriate time using a shaking device such as a shaker. If necessary, the particle size of the wet gel can be adjusted using a jet mill, a roller mill, a bead mill, or the like.

### (Washing and Solvent Substitution Step)

The washing and solvent substitution step is a step including a step (washing step) of washing the wet gel obtained by the wet gel generation step or the wet gel pulverization step and a step (solvent substitution step) of substituting the washing liquid in the wet gel with a solvent suitable for drying conditions (drying step described later). The washing and solvent substitution step can be performed in a form in which only the solvent substitution step is performed without performing the step of washing the wet gel, but the wet gel may be washed from the viewpoint of reducing impurities such as unreacted substances and byproducts in the wet gel and enabling the production of aerogel particles having higher purity.

In the washing step, the wet gel obtained in the wet gel generation step or the wet gel pulverization step is washed. The washing can be repeatedly performed using, for example, water or an organic solvent. At this time, the washing efficiency can be improved by heating.

As the organic solvent, various organic solvents can be used such as methanol, ethanol, 1-propanol, 2-propanol, 1-butanol, acetone, methyl ethyl ketone, 1,2-dimethoxyethane, acetonitrile, hexane, toluene, diethyl ether, chloroform, ethyl acetate, tetrahydrofuran, methylene chloride, N,N-dimethylformamide, dimethylsulfoxide, acetic acid, and formic acid. The above-mentioned organic solvents may be used alone or in combination of two or more kinds thereof.

In the solvent substitution step described later, a solvent having a low surface tension can be used in order to suppress shrinkage of the gel due to drying. However, low surface tension solvents generally have very low mutual solubility with water. Therefore, when a solvent having a low surface tension is used in the solvent substitution step, examples of the organic solvent used in the washing step include a hydrophilic organic solvent having high mutual solubility with respect to both water and a solvent having a low surface tension. The hydrophilic organic solvent used in the washing step can play a role of preliminary substitution for the solvent substitution step. Among the above organic solvents, examples of the hydrophilic organic solvent include methanol, ethanol, 2-propanol, acetone, and methyl ethyl ketone. Methanol, ethanol, methyl ethyl ketone, and the like are excellent in terms of economic efficiency.

The amount of water or organic solvent used in the washing step can be an amount that can sufficiently substitute the solvent in the wet gel and can be washed. The amount can be 3 to 10 times the volume of the wet gel. The washing can be repeated until the water content in the wet gel after washing becomes 10 mass% or less with respect to the silica mass.

The temperature environment in the washing step can be a temperature equal to or lower than the boiling point of the solvent used for washing, and for example, when methanol is used, the temperature can be heated to about 30 to 60°C.

In the solvent substitution step, the solvent of the washed wet gel is substituted with a predetermined solvent for substitution in order to suppress shrinkage of the aerogel in the drying step. At this time, the substitution efficiency can be improved by heating. Specific examples of the solvent for substitution include a solvent having a low surface tension described later when the solvent for substitution is dried under atmospheric pressure at a temperature lower than the critical point of the solvent used for drying in the drying step. On the other hand, when supercritical drying is performed, examples of the solvent for substitution include ethanol, methanol, 2-propanol, dichlorodifluoromethane, and carbon dioxide, or a solvent obtained by mixing two or more thereof.

Examples of the solvent having a low surface tension include solvents having a surface tension of 30 mN/m or less at 20°C. The surface tension may be 25 mN/m or less, or 20 mN/m or less. Examples of the solvent having a low surface tension include aliphatic hydrocarbons such as pentane (15.5), hexane (18.4), heptane (20.2), octane (21.7), 2-methylpentane (17.4), 3-methylpentane (18.1), 2-methylhexane (19.3), cyclopentane (22.6), cyclohexane (25.2), and **1-**pentene (16.0); aromatic hydrocarbons such as benzene (28.9), toluene (28.5), m-xylene (28.7), and p-xylene (28.3); halogenated hydrocarbons such as dichloromethane (27.9), chloroform (27.2), carbon tetrachloride (26.9), 1-chloropropane (21.8), and 2-chloropropane (18.1); ethers such as ethyl ether (17.1), propyl ether (20.5), isopropyl ether (17.7), butyl ethyl ether (20.8), and 1,2-dimethoxyethane (24.6); ketones such as acetone (23.3), methyl ethyl ketone (24.6), methyl propyl ketone (25.1), and diethyl ketone (25.3); esters such as methyl acetate (24.8), ethyl acetate (23.8), propyl acetate (24.3), isopropyl acetate (21.2), isobutyl acetate (23.7), and ethyl butyrate (24.6) (surface tension at 20°C is shown in parentheses, and the unit is [mN/m]). Among them, aliphatic hydrocarbons (hexane, heptane, etc.) have low surface tension and excellent working environment. Among these solvents, a hydrophilic organic solvent such as acetone, methyl ethyl ketone, or 1,2-dimethoxyethane can be used also as the organic solvent in the washing step. Among these solvents, a solvent having a boiling point of 100°C or lower at normal pressure may be used from the viewpoint of easy drying in the drying step described later. The above-mentioned solvents may be used alone or in combination of two or more kinds thereof.

The amount of the solvent used in the solvent substitution step can be an amount that can sufficiently substitute the solvent in the wet gel after washing. The amount can be 3 to 10 times the volume of the wet gel.

The temperature environment in the solvent substitution step can be a temperature equal to or lower than the boiling point of the solvent used for the substitution, and for example, when heptane is used, heating can be performed at about 30 to 60°C.

When silica particles are contained in the gel, the solvent substitution step is not essential. Possible mechanisms are as follows. That is, the silica particles function as a support of a skeleton having a three-dimensional network shape, whereby the skeleton is supported, and shrinkage of the gel in the drying step is suppressed. Therefore, it is considered that the gel can be directly subjected to the drying step without substituting the solvent used for washing. As described above, by using the silica particles, it is possible to simplify the washing and solvent substitution step to the drying step.

### (Drying Step)

In the drying step, the wet gel washed and (if necessary) solvent-substituted as described above is dried. Thereby, an aerogel (aerogel block or aerogel particles) can be obtained. That is, an aerogel obtained by drying the wet gel produced from the sol can be obtained.

The drying method is not particularly limited, and known normal pressure drying, supercritical drying, or freeze drying can be used. Among them, normal pressure drying or supercritical drying can be used from the viewpoint of easily producing a low-density aerogel. From the viewpoint of production at low cost, normal pressure drying can be used. In the present embodiment, normal pressure means 0.1 MPa (atmospheric pressure).

Aerogels can be obtained by drying the washed and (if necessary) solvent-substituted wet gel under atmospheric pressure at a temperature lower than the critical point of the solvent used for drying. The drying temperature varies depending on the type of the substituted solvent (solvent used for washing when solvent substitution is not performed), but may be 20 to 150°C in view of the fact that drying particularly at a high temperature increases the evaporation rate of the solvent and may cause large cracks in the gel. The drying temperature may be 60 to 120°C. The drying time varies depending on the volume of the wet gel and the drying temperature, but may be 4 to 120 hours. In addition, acceleration of drying by applying a pressure less than the critical point within a range in which productivity is not impaired is also included in normal pressure drying.

Aerogels can also be obtained by supercritical drying of wet gels that have been washed and (if necessary) solvent substituted. Supercritical drying can be performed by a known method.

Examples of the method of supercritical drying include a method of removing the solvent at a temperature and pressure equal to or higher than the critical point of the solvent contained in the wet gel. Alternatively, examples of the method for supercritical drying include a method in which the wet gel is immersed in liquefied carbon dioxide under conditions of, for example, 20 to 25°C and about 5 to 20 MPa to substitute all or a part of the solvent contained in the wet gel with carbon dioxide having a lower critical point than the solvent, and then carbon dioxide is removed alone or a mixture of carbon dioxide and the solvent is removed.

The aerogel obtained by such normal pressure drying or supercritical drying may be further additionally dried at 105 to 200°C for about 0.5 to 2 hours under normal pressure. This makes it easier to obtain aerogels with low density and small pores. The additional drying may be performed at 150 to 200°C under normal pressure.

### (Pulverization Step)

When the wet gel pulverization step is not performed, aerogel particles are obtained by pulverizing an aerogel (aerogel block) obtained by drying. For example, it can be performed by putting an aerogel in a jet mill, a roller mill, a bead mill, a hammer mill, or the like and operating it at an appropriate number of rotations and time.

### <Liquid Medium>

The liquid medium is preferably an aqueous solvent containing water. The aqueous solvent may contain an organic solvent in addition to water. The organic solvent may be any solvent as long as it has compatibility with water, and examples thereof include alcohols such as methanol, ethanol, isopropanol, butanol, ethylene glycol, and propylene glycol; ethers such as diethyl ether, tetrahydrofuran, and 1,4-dioxane; ketones such as acetone and methyl ethyl ketone; carboxylic acids such as acetic acid and propionic acid; nitrogen-containing compounds such as acetonitrile, dimethylformamide, and triethylamine.

In the present embodiment, the content of the liquid medium in the coating liquid is not particularly limited, and may be appropriately changed according to the desired viscosity of the coating liquid or the like. For example, the content of the liquid medium may be an amount at which the nonvolatile content concentration of the coating liquid falls within a suitable range described later.

The nonvolatile content concentration of the coating liquid may be, for example, 10 mass% or more, preferably 15 mass% or more, and more preferably 20 mass% or more. Also, the nonvolatile content concentration of the coating liquid may be, for example, 70 mass% or less, preferably 60 mass% or less, and more preferably 50 mass% or less.

That is, the nonvolatile content concentration of the coating liquid may be, for example, 10 to 70 mass%, 10 to 60 mass%, 10 to 50 mass%, 15 to 70 mass%, 15 to 60 mass%, 15 to 50 mass%, 20 to 70 mass%, 20 to 60 mass%, or 20 to 50 mass%.

### <Other Components>

In the present embodiment, the coating liquid may further contain components other than the above components.

The coating liquid of the present embodiment may further contain, for example, a thickener, a fibrous substance, a pigment, a leveling agent, and the like.

Examples of the thickener include fine particles such as fumed silica and clay minerals.

The fibrous substance functions as an anchor between the aerogel particles and can further improve the strength of the composite material. The fibrous substance is not particularly limited, and may be an organic fiber or an inorganic fiber. Examples of the organic fiber include polyamide-based fibers, polyimide-based fibers, polyvinyl alcohol-based fibers, polyvinylidene chloride-based fibers, polyvinyl chloride-based fibers, polyester-based fibers, polyacrylonitrile-based fibers, polyethylene-based fibers, polypropylene-based fibers, polyurethane-based fibers, phenol-based fibers, polyether ester-based fibers, polylactic acid-based fibers, and polycarbonate-based fibers. Examples of the inorganic fibers include glass fibers, carbon fibers, ceramic fibers, and metal fibers.

In the present embodiment, the coating liquid may contain a fibrous substance having a fiber length of 1.5 mm or more, whereby the strength of the composite material formed from the coating liquid is improved, and sufficient heat insulating properties tend to be secured even when the composite material is in the form of a film. The reason for this is not necessarily clear, but the present inventors infer as follows. In general, in order to secure the strength of the molded body, it is preferable that fibers are randomly oriented in the molded body. The reason why the short fibers are used in Patent Literature 2 is considered that the short fibers are more likely to be randomly oriented than the long fibers. However, when a film-shaped molded body having a small thickness is produced, if the short fibers are randomly oriented, a heat conduction path (heat path) by the fibers is easily formed in the thickness direction (direction in which heat insulation is desired), and the heat insulating property in the thickness direction may be impaired. In the present embodiment, it is considered that when the fibrous substance contained in the coating liquid is intentionally formed into a long fiber (fibrous substance having a fiber length of 1.5 mm or more), the fibrous substance is easily oriented in the plane direction when a thin film-like composite material is formed, and it becomes possible to sufficiently secure the heat insulating property in the thickness direction while improving the strength in the plane direction.

From the viewpoint of more remarkably obtaining the above effect, the fiber length of the fibrous substance may be 2 mm or more, 2.5 mm or more, or 3 mm or more. On the other hand, from the viewpoint of dispersibility in the coating liquid and dischargeability by spraying or the like, the fiber length of the fibrous substance may be, for example, 20 mm or less, and may be 15 mm or less or 10 mm or less.

That is, the fiber length of the fibrous substance may be, for example, 1.5 to 20 mm, 1.5 to 10 mm, 1.5 to 10 mm, 2 to 20 mm, 2 to 15 mm, 2 to 10 mm, 2.5 to 20 mm, 2.5 to 15 mm, 2.5 to 10 mm, 3 to 20 mm, 3 to 15 mm, or 3 to 10 mm.

The fiber diameter of the fibrous substance may be, for example, 0.01 to 100 µm from the viewpoint of obtaining dispersibility in a coating liquid and a good anchor function.

The content of the fibrous substance in the coating liquid may be, for example, 0.1 mass% or more based on the total amount of the nonvolatile components in the coating liquid, and may be 0.5 mass% or more, 1 mass% or more, or 3 mass% or more from the viewpoint of further improving the film formability. The content of the fibrous substance in the coating liquid may be, for example, 20 mass% or less based on the total amount of the nonvolatile components in the coating liquid, and may be, for example, 15 mass% or less or 10 mass% or less from the viewpoint of further improving the coating stability.

That is, the content of the fibrous substance in the coating liquid may be, for example, 0.1 to 20 mass%, 0.1 to 15 mass%, 0.1 to 10 mass%, 0.5 to 20 mass%, 0.5 to 15 mass%, 0.5 to 10 mass%, 1 to 20 mass%, 1 to 15 mass%, 1 to 10 mass%, 3 to 20 mass%, 3 to 15 mass%, or 3 to 10 mass% based on the total amount of the nonvolatile components in the coating liquid.

In addition, the content of the fiber (fibrous substance having a fiber length of 1.5 mm or more) may be, for example, 30 mass% or more and 50 mass% or more based on the total amount of the fibrous substance. The upper limit of the content is not particularly limited, and may be 100 mass% (that is, the fiber length of all the fibrous substances in the coating liquid is 1.5 mm or more.).

The content of the fibrous substance in the coating liquid may be appropriately adjusted so that the content of the fibrous substance in the composite material falls within a suitable range described later.

The content of chloride ions in the coating liquid of the present embodiment is 50 ppm by mass or less, and may be 30 ppm by mass or less, 10 ppm by mass or less, 5 ppm by mass or less, or 1 ppm by mass or less from the viewpoint of further suppressing the corrosiveness to metal.

The content of sulfate ions in the coating liquid of the present embodiment is 50 ppm by mass or less, and may be 30 ppm by mass or less, 10 ppm by mass or less, 5 ppm by mass or less, or 1 ppm by mass or less from the viewpoint of further suppressing the corrosiveness to metal.

In the present embodiment, the preferred range described above may be achieved by using components having low (or no) content of chloride ions and sulfate ions for each component in the coating liquid. In addition, for example, when a nonionic emulsifier is used as the emulsifier, the contents of chloride ions and sulfate ions can be easily adjusted to the above-described suitable ranges as compared with the case of using other emulsifiers (for example, anionic emulsifiers).

### [Method for Producing Coating Liquid]

In the present embodiment, the coating liquid may be produced by a production method including an emulsion preparation step, a dispersion preparation step, and a coating liquid production step.

The emulsion preparation step is a step of preparing an emulsion containing emulsion particles containing a binder resin and a first liquid medium.

The emulsion preparation step may be, for example, a step of performing emulsion polymerization of the monomer components described above in the first liquid medium in the presence of an emulsifier to obtain the emulsion.

Examples of the first liquid medium include the same liquid medium as described above. The first liquid medium is preferably an aqueous solvent.

The emulsion polymerization may be performed by, for example, step (i) of mixing the monomer component and the emulsifier in the first liquid medium to obtain a monomer emulsion and step (ii) of mixing the monomer emulsion and the radical polymerization initiator to perform emulsion polymerization of the monomer component.

In step (i), the amount of the emulsifier may be, for example, 0.01 parts by mass or more, 0.1 parts by mass or more, 0.3 parts by mass or more, 0.5 parts by mass or more, 0.7 parts by mass or more, 0.9 parts by mass or more, or 1 part by mass or more with respect to 100 parts by mass of the monomer component. In step (i), the amount of the emulsifier may be, for example, 15 parts by mass or less, 12 parts by mass or less, 10 parts by mass or less, 8 parts by mass or less, or 6 parts by mass or less with respect to 100 parts by mass of the monomer component.

That is, in step (i), the amount of the emulsifier may be, for example, 0.01 to 15 parts by mass, 0.01 to 12 parts by mass, 0.01 to 10 parts by mass, 0.01 to 8 parts by mass, 0.01 to 6 parts by mass, 0.1 to 15 parts by mass, 0.1 to 12 parts by mass, 0.1 to 10 parts by mass, 0.1 to 8 parts by mass, 0.1 to 6 parts by mass, 0.3 to 15 parts by mass, 0.3 to 12 parts by mass, 0.3 to 10 parts by mass, 0.3 to 8 parts by mass, 0.3 to 6 parts by mass, 0.5 to 15 parts by mass, 0.5 to 12 parts by mass, 0.5 to 10 parts by mass, 0.5 to 8 parts by mass, 0.5 to 6 parts by mass, 0.7 to 15 parts by mass, 0.7 to 12 parts by mass, 0.7 to 10 parts by mass, 0.7 to 8 parts by mass, 0.7 to 6 parts by mass, 0.9 to 15 parts by mass, 0.9 to 12 parts by mass, 0.9 to 10 parts by mass, 0.9 to 8 parts by mass, 0.9 to 6 parts by mass, 1 to 15 parts by mass, 1 to 12 parts by mass, 1 to 10 parts by mass, 1 to 8 parts by mass, or 1 to 6 parts by mass with respect to 100 parts by mass of the monomer component.

The radical polymerization initiator is not particularly limited as long as it is a polymerization initiator capable of initiating emulsion polymerization of the monomer component, and may be appropriately selected from known radical polymerization initiators.

Examples of the radical polymerization initiator include hydrogen peroxide, tert-butyl hydroperoxide, cumene hydroperoxide, 4,4'-azobis(4-cyanovaleric acid), and 2,2'-azobis[N-(2-hydroxyethyl)-2-methylpropanamide].

In step (ii), the amount of the radical polymerization initiator may be, for example, 0.001 parts by mass or more, 0.01 parts by mass or more, 0.05 parts by mass or more, or 0.1 parts by mass or more with respect to 100 parts by mass of the monomer component. In step (ii), the amount of the radical polymerization initiator may be, for example, 5 parts by mass or less, 3 parts by mass or less, 2 parts by mass or less, or 1 part by mass or less with respect to 100 parts by mass of the monomer component.

That is, in step (ii), the amount of the radical polymerization initiator may be, for example, 0.001 to 5 parts by mass, 0.001 to 3 parts by mass, 0.001 to 2 parts by mass, 0.001 to 1 parts by mass, 0.01 to 5 parts by mass, 0.01 to 3 parts by mass, 0.01 to 2 parts by mass, 0.01 to 1 parts by mass, 0.05 to 5 parts by mass, 0.05 to 3 parts by mass, 0.05 to 2 parts by mass, 0.05 to 1 parts by mass, 0.1 to 5 parts by mass, 0.1 to 3 parts by mass, 0.1 to 2 parts by mass, or 0.1 to 1 parts by mass with respect to 100 parts by mass of the monomer component.

In step (ii), a reducing agent may be used together with a radical polymerization initiator as necessary. This promotes radical generation of the radical polymerization initiator. Examples of the reducing agent include reducing organic compounds such as ascorbic acid, tartaric acid, citric acid, and glucose, and reducing inorganic compounds such as thiourea dioxide and hydrazine.

In step (ii), neutralization may be performed with a neutralizing agent after the emulsion polymerization is completed. The neutralizing agent is not particularly limited, and may be a known neutralizing agent. Examples of the neutralizing agent include ammonia water, morpholine, 2-amino-2-methyl-1-propanol, triethylamine, triethanolamine, sodium hydroxide, and potassium hydroxide. The amount of the neutralizing agent is not particularly limited, and for example, may be appropriately adjusted so that the pH of the resulting emulsion is 7 to 11 (preferably 8 to 10).

The emulsion obtained in step (ii) contains emulsion particles containing a binder resin. The average particle diameter of the emulsion particles in the emulsion may be, for example, 50 nm or more, 70 nm or more, 90 nm or more, or 100 nm. The average particle diameter of the emulsion particles in the emulsion may be, for example, 400 nm or less, 350 nm or less, or 300 nm or less.

That is, the average particle size of the emulsion particles in the emulsion may be, for example, 50 to 400 nm, 50 to 350 nm, 50 to 300 nm, 70 to 400 nm, 70 to 350 nm, 70 to 300 nm, 90 to 400 nm, 90 to 350 nm, 90 to 300 nm, 100 to 400 nm, 100 to 350 nm, or 100 to 300 nm.

In the present specification, the average particle diameter of the emulsion particles in the emulsion is a value measured by dynamic light scattering (DLS) using MICROTRAC UPA150 (manufactured by MicrotracBEL Corp.) at 23°C.

The minimum film-forming temperature (MFT) of the emulsion obtained in step (ii) may be, for example, 25°C or lower, and is preferably 20°C or lower, and more preferably 15°C or lower from the viewpoint of further improving the film-forming property. The minimum filming temperature (MFT) of the emulsion is preferably 10°C or lower, more preferably 8°C or lower, and may be 6°C or lower from the viewpoint of further excellent film-forming properties at a low temperature. The lower limit of the minimum filming temperature (MFT) of the emulsion is not particularly limited. In the case of a coating material containing an aqueous solvent, MFT at 0°C or lower cannot be measured.

The dispersion preparation step is a step of mixing the aerogel particles, the water-soluble polymer, and the second liquid medium to obtain a dispersion containing the aerogel particles, the water-soluble polymer, and the second liquid medium.

The dispersion preparation step may be a step of mixing the aerogel particles, the water-soluble polymer, and the second liquid medium so that the aerogel particles aggregate to obtain a dispersion containing the aggregates of the aerogel particles, the water-soluble polymer, and the second liquid medium.

The second liquid medium may be the same as the liquid medium described above. The second liquid medium is preferably an aqueous solvent.

In the dispersion preparation step, the amount of the water-soluble polymer may be, for example, 0.1 parts by mass or more, 0.5 parts by mass or more, 1 part by mass or more, 2 parts by mass or more, or 3 parts by mass or more with respect to 100 parts by mass of the aerogel particles. Further, in the dispersion preparation step, the amount of the water-soluble polymer may be, for example, 20 parts by mass or less, 15 parts by mass or less, or 10 parts by mass or less with respect to 100 parts by mass of the aerogel particles.

That is, in the dispersion preparation step, the amount of the water-soluble polymer may be, for example, 0.1 to 20 parts by mass, 0.1 to 15 parts by mass, 0.1 to 10 parts by mass, 0.5 to 20 parts by mass, 0.5 to 15 parts by mass, 0.5 to 10 parts by mass, 1 to 20 parts by mass, 1 to 15 parts by mass, 1 to 10 parts by mass, 2 to 20 parts by mass, 2 to 15 parts by mass, 2 to 10 parts by mass, 3 to 20 parts by mass, 3 to 15 parts by mass, or 3 to 10 parts by mass with respect to 100 parts by mass of the aerogel particles.

In the dispersion preparation step, the mixing method is not particularly limited, and may be, for example, mixing by stirring.

The stirring rate affects the size of the aggregates. The larger the stirring speed, the more the shear stress is applied, so that the size of the aggregates tends to decrease. Therefore, from the viewpoint of obtaining an aggregate having a suitable size as described later, it is desirable to mix at a small stirring speed.

The viscosity at the time of mixing also affects the size of the aggregates. Even at the same stirring speed, the shear stress varies depending on the viscosity. The higher the viscosity, the greater the shear stress and the lower the size of the aggregate. On the other hand, when the viscosity is low, the shear stress decreases, and the aggregates tend to increase. Therefore, the desired size of the aggregates can be achieved by adjusting the stirring speed according to the viscosity.

In addition, the amount of the liquid medium at the time of mixing also affects the size of the aggregates. Even if the final composition is the same, the size of the aggregates is different between (i) a method in which the entire amount of the liquid medium is charged from the initial stage of mixing and (ii) a method in which the mixture is mixed with a small amount of the liquid medium at the initial stage of mixing and then the liquid medium is added. The method (ii) has a higher initial viscosity than the method (i). Therefore, in the method (ii), the size of aggregates tends to be reduced as compared with the method (i). By selectively using these methods according to the conditions of the composition, the mixing device (stirring device), and the like, aggregates of a desired size can be formed.

The size of the aggregates in the dispersion liquid is not particularly limited, and may be appropriately adjusted so that the size of the aggregates in the coating liquid falls within a suitable range described later.

The coating liquid production step is a step of mixing the emulsion and the dispersion to obtain a coating liquid.

In the coating liquid production step, the mixing method is not particularly limited, and may be, for example, mixing by stirring.

Similarly to the mixing method in the dispersion preparation step described above, the mixing method in the coating liquid production step may be appropriately adjusted so that the size of the aggregates of the aerogel particles falls within a suitable range described later.

The average diameter of the aggregates may be, for example, 20 µm or more, or 30 µm or more. When the average diameter of the aggregates is large, the contact interface between the aerogel and the binder resin is further reduced, and the permeation of the resin into the pores of the aerogel is further suppressed. The average diameter of the aggregates may be, for example, 300 µm or less, 200 µm or less, or 150 µm or less. When the average diameter of the aggregates is small, a decrease in membrane strength due to continuation of a relatively brittle aerogel is suppressed, and a stronger composite material is easily obtained.

That is, the average diameter of the aggregates may be, for example, 20 to 300 µm, 20 to 200 µm, 20 to 150 µm, 30 to 300 µm, 30 to 200 µm, or 30 to 150 µm.

The average diameter of the aggregates may be twice or more or three times or more the average diameter of the aerogel particles. When the average diameter of the aggregates is large, the contact interface between the aerogel and the binder resin is further reduced, and the permeation of the resin into the pores of the aerogel is further suppressed. Also, the average diameter of the aggregates may be 30 times or less, 20 times or less, or 15 times or less the average diameter of the aerogel particles. When the average diameter of the aggregates is small, a decrease in membrane strength due to continuation of a relatively brittle aerogel is suppressed, and a stronger composite material is easily obtained.

That is, the average diameter of the aggregates may be 2 to 30 times, 2 to 20 times, 2 to 15 times, 3 to 30 times, 3 to 20 times, or 3 to 15 times the average diameter of the aerogel particles.

In the present specification, the average diameter of aggregates indicates a value measured by the following method.

### [Method for Measuring Average Diameter of Aggregates in Coating Liquid]

About 20 g of the coating liquid is placed in a 100 mL poly cup, and 2 g of water is added at a time with stirring using a spatula, thereby diluting the coating liquid while gradually blending the coating liquid. The diluted sample is taken on a glass plate and a micrograph of the sample is obtained using an optical microscope (manufactured by Olympus Corporation, model number: BX51). The obtained photomicrograph is analyzed using image editing software ImageJ to determine the diameters of a plurality of aggregates in the micrograph. The average value of the obtained values is taken as the average diameter of the aggregates.

In the present specification, the average diameter of the aerogel particles is synonymous with the average particle diameter (D50) of the aerogel particles described above.

In the present embodiment, when the diluted solution obtained by diluting the coating liquid is observed with an optical microscope, the area occupied by the aggregates having a diameter of 20 µm or more (more preferably, the aggregates having a diameter of 50 µm or more) in the area occupied by the aerogel particles (including the aggregates) in the observation field is preferably 50% or more, more preferably 60% or more, still more preferably 70% or more, and may be 100%.

In the present specification, the diluted solution obtained by diluting the coating liquid and the method for observing the diluted solution may be the same as the sample prepared in [Method for measuring average diameter of aggregates in coating liquid] described above and the method for observing the sample. In addition, the "... area in the observation field" is obtained by analyzing a photomicrograph using image editing software ImageJ.

### <Method for Producing Composite Material>

In the present embodiment, the composite material is produced by a production method including an application step of applying the coating liquid onto a support to obtain a coating film, and a removal step of removing at least a part of the liquid medium from the coating film to obtain a composite material. That is, the composite material of the present embodiment may be a dried product of the coating liquid.

The composite material of the present embodiment may be, for example, a composite material containing a binder resin, aerogel particles, and a water-soluble polymer having a hydrophobic group.

In the present embodiment, a composite material in which the aerogel particles and the binder particles are suitably dispersed can be easily obtained by using the coating liquid. In addition, the coating liquid of the present embodiment is useful for forming a composite material on a surface of a metal such as steel because corrosion (flash rust) generated between coating and drying is suppressed. Therefore, the coating liquid and the composite material of the present embodiment can be suitably used for applications (for example, plant piping, industrial equipment, and the like) that may come into contact with metal without concern in construction management.

The support to which the coating liquid is applied is not particularly limited. The support may be delaminated from the composite material after production of the composite material and may be used without delamination from the composite material. The support may, for example, be an object to which the composite material is applied. The material constituting the support is not particularly limited, and may be, for example, metal, ceramic, glass, resin, or a mixture thereof. The form of the support may be appropriately selected according to the purpose of use, the material, and the like, and may be, for example, a block shape, a sheet shape, a powder shape, a fiber shape, or the like.

The method for applying the coating liquid is not particularly limited, and examples thereof include dip coating, spray coating, spin coating, roll coating, and the like.

As a coating method of the coating liquid, a coating method in which the pressure applied to the coating liquid is 1.5 MPa or less is preferable. According to such a coating method, the crushing of the aggregates in the coating liquid due to the load at the time of coating is suppressed, and the above-described effect by the aggregates is more remarkably exhibited. For example, application methods such as roller application, trowel application, and air spray are preferable because the pressure applied to the coating liquid is easily reduced.

In the removing step, a composite material containing a binder resin, aerogel particles, and a water-soluble polymer is formed by removing at least a part of the liquid medium from the coating film.

The method for removing the liquid medium from the coating film is not particularly limited, and examples thereof include a method in which heating (for example, 40 to 150°C) treatment, decompression (for example, 10,000 Pa or less) treatment, or both of these treatments are performed.

The thickness of the composite material is not particularly limited, and may be, for example, 0.05 mm or more, 0.1 mm or more, 0.5 mm or more, or 1 mm or more. The thickness of the composite material may be, for example, 30 mm or less, 20 mm or less, 10 mm or less, or 5 mm or less.

That is, the thickness of the composite material may be, for example, 0.05 to 30 mm, 0.05 to 20 mm, 0.05 to 10 mm, 0.05 to 5 mm, 0.1 to 30 mm, 0.1 to 20 mm, 0.1 to 10 mm, 0.1 to 5 mm, 0.5 to 30 mm, 0.5 to 20 mm, 0.5 to 10 mm, 0.5 to 5 mm, 1 to 30 mm, 1 to 20 mm, 1 to 10 mm, or 1 to 5 mm.

The composite material has pores resulting from aerogel particles. The pore volume of the composite material is preferably 0.15 cm³/g or more, more preferably 0.20 cm³/g or more, and still more preferably 0.60 cm³/g or more from the viewpoint of obtaining higher heat insulating properties. The upper limit of the pore volume of the composite material is not particularly limited. The pore volume of the composite material may be, for example, 5.0 cm³/g or less.

That is, the pore volume of the composite material may be, for example, 0.15 to 5.0 cm³/g, 0.20 to 5.0 cm³/g, or 0.60 to 5.0 cm³/g.

The thermal conductivity of the composite material is, for example, 0.05 W/(m·K) or less, preferably 0.04 W/(m·K) or less, and more preferably 0.035 W/(m·K) or less. The lower limit of the thermal conductivity of the composite material is not particularly limited. The thermal conductivity of the composite material may be, for example, 0.01 W/(m·K) or more.

That is, the thermal conductivity of the composite material may be, for example, 0.01 to 0.05 W/(m·K), 0.01 to 0.04 W/(m·K), or 0.01 to 0.035 W/(m·K).

The composite material of the present embodiment has excellent heat insulating properties derived from aerogel. Therefore, the composite material can be applied to applications as a heat insulating material in a cryogenic container, a space field, a construction field such as piping and an outer wall, an automobile field such as a car air conditioning unit and an engine, a home appliance field such as a refrigerator and a freezer, a semiconductor field, industrial equipment such as piping and a tank, and the like. In addition, the composite material can be used not only as a heat insulating material but also as a water repellent material, a sound absorbing material, a vibration suppressing material, a catalyst carrying material, and the like. In addition, the composite material of the present embodiment is excellent in bending resistance. Therefore, the composite material of the present embodiment can be suitably used for application to a support having a curved surface, application to a support having a bent surface, arrangement on a curved surface, winding around a cylindrical portion, and the like.

The composite material of the present embodiment can be suitably used for applications in contact with a heat source.

The article of the present embodiment may include, for example, a heat source and a composite material in thermal contact with the heat source.

Although the preferred embodiments of the present invention have been described above, the present invention is not limited to the above embodiments.

### Example

Hereinafter, the present invention will be described in more detail with reference to Examples, but the present invention is not limited to these Examples.

### (Example 1)

### (1) Production of Emulsion

A reaction vessel equipped with a stirrer, a thermometer, a cooling tube, and a dropping funnel was charged with 160 parts by mass of ion-exchanged water and 1.2 parts by mass of a nonionic emulsifier (EMULGEN 1150 S-60, 60% aqueous solution of polyoxyethylene alkyl ether, manufactured by Kao Corporation, HLB value: 18.5), and the mixture was stirred, heated to 65°C, and then dissolved oxygen was removed by nitrogen gas permeation into the reaction vessel.

Subsequently, 274 parts by mass of butyl acrylate, 173.5 parts by mass of methyl methacrylate, 24 parts by mass of 2-hydroxyethyl methacrylate, 9 parts by mass of methacrylic acid, 215 parts by mass of ion-exchanged water, and 48.8 parts by mass of a nonionic emulsifier (EMULGEN 1150 S-60, 60% aqueous solution of polyoxyethylene alkyl ether, manufactured by Kao Corporation, HLB value: 18.5) were mixed and emulsified with a homomixer to obtain a monomer emulsion.

3% of the monomer emulsion was added to the reaction vessel under stirring, and 0.7 parts by mass of "Trigonox A-W70" (70% aqueous solution of tert-butyl hydroperoxide manufactured by KAYAKU NOURYON CORPORATION) and 0.23 parts by mass of ascorbic acid as radical polymerization initiators were added and reacted for 15 minutes. Subsequently, the remaining 97% of the monomer emulsion, a solution obtained by dissolving 0.9 parts by mass of "Trigonox A-W70" in 60 parts by mass of deionized water, and a solution obtained by dissolving 0.37 parts by mass of ascorbic acid in 60 parts by mass of deionized water were each added dropwise to the reaction vessel over 4 hours for reaction. After completion of the dropwise addition, the mixture was further stirred at 65°C for 1 hour, then cooled to 40°C or lower, and 2.9 parts by mass of ammonia water having a concentration of 26% was added as a neutralizing agent. As a result, an emulsion containing emulsion particles containing a binder resin and a nonionic emulsifier and water was obtained.

The properties of the emulsion were as follows.
·Nonvolatile content concentration: 49.5 mass%
·Viscosity at 23°C: 35 mPa·s
·pH at 23°C: 8.6
·Minimum filming temperature (MFT): 5°C
·Glass transition temperature of binder resin: 9°C
·Average particle diameter of emulsion particles: 210 nm

### [Measurement of Nonvolatile Content Concentration of Emulsion]

1 g of the emulsion was weighed, placed on an aluminum dish having a diameter of 5 cm, and placed in a dryer. Drying was performed at 1 atm (1013 hPa) and a temperature of 105°C for 1 hour while circulating air in the dryer, and the mass of the remaining components was measured. The mass ratio (mass%) of the components remaining after drying to the mass (1 g) of the emulsion before drying was calculated and taken as the nonvolatile content concentration (mass%).

### [Measurement of Viscosity of Emulsion]

Measurement was performed under conditions of a temperature of 23°C and a rotation speed of 60rpm using a BL type viscometer as a measuring instrument.

### [Measurement of pH of Emulsion]

The pH at 23°C was measured using a pH meter (Glass electrodetype hydrogen ion concentration indicator HM-30G manufactured by DKK-TOA CORPORATION).

### [Measurement of Average Particle Diameter of Emulsion Particles]

The average particle size (d50) of the emulsion particles was measured at 23°C by a dynamic light scattering method (DLS) using MICROTRAC UPA150 (manufactured by MicrotracBEL Corp.).

### [Measurement of Minimum Filming Temperature (MFT)]

The emulsion was applied to the measurement surface of a thermal gradient MFT measuring instrument using a 0.3 mm applicator and dried under no wind. Film formation failure cracks of the dry film were visually observed, and MFT was measured.

### [Glass Transition Temperature (Tg) of Binder Resin]

The glass transition temperature (Tg) of the binder resin was determined by measuring the temperature dependence of the loss tangent with a rheometer (MCR-102, manufactured by Anton Paar GmbH). Specifically, a parallel flat plate having a diameter of 12 mm was used, and measurement conditions were a frequency of 1 Hz and a strain of 2% in a vibration mode. A small amount of the emulsion was dispensed on the measurement plate, and then the plate was brought into contact with the emulsion, and the temperature was raised from 30°C to 180°C at a rate of 10°C/min to remove the volatile content of the emulsion and bring the resin into close contact with the plate. Subsequently, the temperature was lowered from 180°C to 0°C at a rate of 2°C/min, the loss tangent was measured at intervals of 1 point/°C, and the temperature at which the loss tangent was maximum was defined as the glass transition temperature.

### (2) Production of Coating Liquid

In a 500 mL separable flask, 1 part by mass of Sangellose 90L (manufactured by Daido Chemical Corporation) as a water-soluble polymer, 9 parts by mass of isopropyl alcohol (reagents manufactured by Fujifilm Wako Pure Chemical Industries, Ltd.), 179 parts by mass of hot water, and 4 parts by mass of glass fiber (manufactured by NITTO BOSEKI CO., LTD., product name: CS 3J-891) were charged, and stirred at 200 rpm for 1 minute using a mechanical stirrer to obtain a dispersion. Subsequently, while the flask was cooled in an ice-water bath, the mixture was stirred at 200 rpm using a mechanical stirrer to dissolve Sangellose 90L, thereby obtaining a pre-gel as an aqueous solution of Sangellose 90L. 188 parts by mass of the pre-gel and 21 parts by mass of aerogel particles (manufactured by Cabot Corporation, product name: ENOVA MT1100, particle diameter 2 to 24 µm, average particle diameter (D50) 10 µm) were added to a planetary mixer (2P-1 type, manufactured by PRIMIX Corporation), and the mixture was stirred at 25 rpm for 10 minutes. Subsequently, 86 parts by mass of the emulsion obtained in (1) was added, and the mixture was stirred at 25 rpm for 15 minutes to obtain a coating liquid.

The content of the aerogel particles in the coating liquid was 84.9 vol% based on the total volume of the solid content. Further, in the coating liquid, the content of the water-soluble polymer was 1.5 mass%, and the content of the emulsion particles (the total amount of the binder resin and the emulsifier) was 61.5 mass%, based on the total amount of the nonvolatile components.

The average diameter of aggregates of aerogel particles in the obtained coating liquid was measured by the following method. The results are shown in Table 1.

### <Measurement of Average Diameter of Aggregates of Aerogel Particles>

About 20 g of the coating liquid was placed in a 100 mL poly cup, and 2 g of water was added at a time with stirring using a spatula, followed by diluting the coating liquid while gradually blending the coating liquid. The diluted sample was placed on a glass plate, and using an optical microscope (manufactured by Olympus Corporation, model number: BX51), aggregates of aerogel particles in the coating liquid were observed to obtain a photomicrograph. The obtained photomicrograph was analyzed using image editing software ImageJ to determine the average diameter of aggregates of aerogel particles.

### <Measurement of Content of Chloride Ions and Sulfate Ions>

About 2.0 g of the coating liquid and about 20.0 g of ultrapure water were put in a Teflon (registered trademark) container, and the mixture was heated and extracted at 100°C for 2 hours. After cooling, centrifugation was performed at 15000 rpm for 1 hour, and the supernatant was subjected to solid-phase extraction and then ultrafiltration to obtain a measurement sample. Measurement of the ion content was performed using ion chromatography (manufactured by Thermo Fisher Scientific K.K., product name: ICS-2000) equipped with an anion exchange column (manufactured by Thermo Fisher Scientific, Inc., product name: AS20) under the conditions of a column temperature of 30°C, a flow rate of 1.0 mL/min, an injection amount of 25 µL, a gradient setting of potassium hydroxide solution of 5 mM at the time of 0 to 5 minutes, 30 mM at the time of 15 minutes, and 55 mM at the time of 20 minutes. Chloride ions were evaluated from the peak detected at a retention time of 10.8 minutes, and the content of sulfate ions was evaluated from the peak detected at a retention time of 16.1 minutes.

### <Evaluation of Cracking of Composite Material at 23°C>

A frame made of a fluororesin and having a length and width of 40 mm and a thickness of 2 mm was prepared on an aluminum foil (manufactured by UACJ Corporation, product name: My Foil Thick Type 50, thickness: 50 µm), and a coating liquid was applied into the frame using a spatula to prepare an evaluation sample. The evaluation sample was left standing for 12 hours in a bath of a low-temperature constanttemperature and constant-humidity machine (HIFLEX FX411N manufactured by Kusumoto Chemicals, Ltd.) set at 23°C and 60%RH to remove the liquid medium from the coating liquid, thereby obtaining a composite material. With respect to the obtained composite material, the degree of cracking was evaluated by defining the case where there was no crack in the whole as A, the case where there was a crack in a part as B, and the case where there was a crack in the whole as C.

### <Evaluation of Cracking of Composite Material at 10°C>

A frame made of a fluororesin and having a length and width of 40 mm and a thickness of 2 mm was prepared on an aluminum foil (manufactured by UACJ Corporation, product name: My Foil Thick Type 50, thickness: 50 µm), and a coating liquid was applied into the frame using a spatula to prepare an evaluation sample. The evaluation sample was left standing for 24 hours in a bath of a low-temperature constanttemperature and constant-humidity machine (HIFLEX FX411N manufactured by Kusumoto Chemicals, Ltd.) set at 10°C and 60%RH to remove the liquid medium from the coating liquid, thereby obtaining a composite material. With respect to the obtained composite material, the degree of cracking was evaluated by defining the case where there was no crack in the whole as A, the case where there was a crack in a part as B, and the case where there was a crack in the whole as C.

### <Evaluation of Pore Volume of Composite Material>

A composite material was prepared in the same manner as in <Evaluation of Cracking of Composite Material at 23°C>. 100 mg of the obtained composite material was collected, and the pore volume was calculated using a high-sensitivity gas adsorption analyzer (AutoSorb iQ manufactured by Quantachrome Instruments).

### <Evaluation of Thermal Conductivity of Composite Material>

A frame made of a fluororesin and having a length and width of 200 mm and a thickness of 3 mm was prepared on an aluminum foil (manufactured by UACJ Corporation, product name: My Foil Thick Type 50, thickness: 50 µm), and a coating liquid was applied into the frame using a spatula. The liquid medium was removed from the coating liquid by leaving the coating liquid at room temperature of 23°C for 12 hours to obtain a composite material having a thickness of 1.5 mm. Further, this operation was repeated to obtain a composite material having a thickness of 3.0 m. The thermal conductivity of the obtained composite material was measured by a stationary method using a thermal conductivity measuring apparatus "HFM-446" (manufactured by NETZSCH, product name).

### <Evaluation of Corrosiveness of Composite Material>

On a carbon steel sheet (100 mm×70 mm×0.8 mm), several mL of the coating liquid was dropped, and the coating liquid was left standing at room temperature of 23°C for 12 hours to remove the liquid medium from the coating liquid, thereby forming a coating film. Subsequently, the coating film was removed to expose the surface of the carbon steel sheet, and the presence or absence of rust was visually observed. Corrosiveness (flash rust) was evaluated by defining a case where rust was not present as A, a case where rust occurred in less than 10% of the coating film region as B, and a case where rust occurred in 10% or more as C.

### <Evaluation of Weather Resistance of Composite Material>

A coating liquid was applied onto a carbon steel sheet (100 mm×70 mm×0.8 mm) in a thickness of 2 mm by air spraying, and left standing at room temperature of 23°C for 12 hours to remove a liquid medium from the coating liquid, thereby obtaining a carbon steel sheet with a composite material having a thickness of 1 mm. Next, an accelerated weathering test was performed for 240 cycles and 1920 hours under the conditions shown below, and then white mildew was evaluated.

### ·Cycle conditions (1 cycle)

(1) On irradiation 60 ± 3°C for 4 hours
(2) Dark and wet 50 + 2°C for 4 hours

### ·Evaluation of white staining

The adhesive tape was peeled off after being strongly pressed against the composite material, the amount of fine powder attached to the tape was observed, and the grade was determined with reference to JIS-K5600-8-6 (those with no adhesion were classified as grade 1, those with fine powder transferred to the entire surface of the tape without gaps were classified as grade 5, and those in the middle were classified as grade 2, grade 3, and grade 4 from the side with a smaller adhesion amount).

### <Evaluation of Flex Resistance of Composite Material>

Except that the thickness of the composite material was 1 mm or 2 mm, and a stainless steel plate (100 mm×70 mm×0.3 mm) was used as a base material, the same procedure as in <Evaluation of Weather Resistance of Composite Material> was carried out to produce a composite material, and the composite material was used as an evaluation sample. The evaluation sample was bent along a cylindrical mandrel having a diameter of 10 mm, and the presence or absence of cracking and peeling was visually checked. A case where cracking and peeling were not confirmed was evaluated as A, and a case where cracking or peeling was confirmed was evaluated as B.

### (Example 2)

A coating liquid was produced in the same manner as in Example 1 except that the mixture was additionally stirred at 50 rpm for 3 minutes with a planetary mixer (2P-1 type, manufactured by PRIMIX Corporation). The obtained coating liquid was evaluated in the same manner as in Example 1. The results are shown in Table 1.

### (Example 3)

A coating liquid was produced in the same manner as in Example 1 except that the mixture was additionally stirred at 50 rpm for 5 minutes with a planetary mixer (2P-1 type, manufactured by PRIMIX Corporation). The obtained coating liquid was evaluated in the same manner as in Example 1. The results are shown in Table 1.

### (Example 4)

A coating liquid was produced in the same manner as in Example 1 except that the mixture was additionally stirred at 50 rpm for 15 minutes with a planetary mixer (2P-1 type, manufactured by PRIMIX Corporation). The obtained coating liquid was evaluated in the same manner as in Example 1. The results are shown in Table 1.

### (Example 5)

A coating liquid was produced in the same manner as in Example 1 except that the amount of the aerogel particles was changed to 14 parts by mass and the amount of the emulsion was changed to 93 parts by mass. The obtained coating liquid was evaluated in the same manner as in Example 1. The results are shown in Table 2.

### (Example 6)

A coating liquid was produced in the same manner as in Example 1 except that the aerogel particles were changed to Aerova (average particle diameter (D50) 17 µm) manufactured by JIOS Corporation. The results of evaluating the obtained coating liquid by the same method as in Example 1 are shown in the table.

### (Example 7)

### (1) Preparation of Aerogel Particles A

100.0 parts by mass of PL-2L (Product name, manufactured by FUSO CHEMICAL CO., LTD.) as a silica particle-containing raw material, 80.0 parts by mass of water, 0.5 parts by mass of acetic acid as an acid catalyst, 1.0 parts by mass of cetyltrimethylammonium bromide (manufactured by Wako Pure Chemical Industries, Ltd.) as a cationic surfactant, and 150.0 parts by mass of urea as a thermally hydrolyzable product were mixed, and 60.0 parts by mass of methyltrimethoxysilane (manufactured by Shin-Etsu Chemical Co., Ltd., product name: KBM-13) as a silicon compound, 20.0 parts by mass of dimethyldimethoxysilane (manufactured by Shin-Etsu Chemical Co., Ltd.: KMB-22), and 20.0 parts by mass of a both-end bifunctional alkoxy-modified polysiloxane compound (hereinafter, referred to as "polysiloxane compound A") were added thereto, and the mixture was reacted at 25°C for 2 hours to obtain a sol. The obtained sol was gelled at 60°C, and then aged at 60°C for 48 hours to obtain a wet gel.

The "polysiloxane compound A" was synthesized as follows. First, in a 1 liter three-necked flask equipped with a stirrer, a thermometer, and a Dimroth condenser, 100.0 parts by mass of dimethylpolysiloxane XC96-723 having silanol groups at both ends (product name, manufactured by Momentive Performance Materials Japan LLC), 181.3 parts by mass of methyltrimethoxysilane, and 0.50 parts by mass of t-butylamine were mixed, and the mixture was reacted at 30°C for 5 hours. Thereafter, this reaction liquid was heated at 140°C for 2 hours under a reduced pressure of 1.3 kPa to remove volatiles, thereby obtaining a both-end bifunctional alkoxy-modified polysiloxane compound (polysiloxane compound A).

Thereafter, the obtained wet gel was transferred to a plastic bottle, and after sealing, the wet gel was pulverized at 27,000 rpm for 10 minutes using an Extreme Mill (Manufactured by AS ONE CORPORATION, MX-1000XTS) to obtain a particulate wet gel. The obtained particulate wet gel was immersed in 2500.0 parts by mass of methanol, and washed at 25°C for 24 hours. This washing operation was performed three times in total while exchanging with new methanol. Next, the washed particulate wet gel was immersed in 2500.0 parts by mass of heptane as a low surface tension solvent, and subjected to solvent substitution at 25°C over 24 hours. This solvent substitution operation was performed three times in total while exchanging with new heptane. The washed and solvent-substituted particulate wet gel was dried at 40°C for 96 hours under normal pressure, and then further dried at 150°C for 2 hours. Finally, aerogel particles A were obtained by passing the mixture through a sieve (manufactured by TOKYO SCREEN CO., LTD., mesh size: 45 µm, wire diameter: 32 µm).

### (2) Production of Coating Liquid

A coating liquid was produced in the same manner as in Example 1 except that the aerogel particles were changed to aerogel particles A. The results of evaluating the obtained coating liquid by the same method as in Example 1 are shown in Table 2.

### (Comparative Example 1)

A coating liquid was produced in the same manner as in Example 1 except that the emulsion was changed to Boncoat DV759 EF (Tg of resin: 15°C) manufactured by DIC Corporation. The obtained coating liquid was evaluated in the same manner as in Example 1. The results are shown in Table 3.

### (Comparative Example 2)

A coating liquid was produced in the same manner as in Example 1 except that the emulsion was changed to Boncoat DV759 EF manufactured by DIC Corporation and additionally stirred at 1500 rpm for 5 minutes using a rotation-revolution stirring mixer (manufactured by THINKY CORPORATION, product name: Awatori Rentaro, model number: ARE-310). The obtained coating liquid was evaluated in the same manner as in Example 1. The results are shown in Table 3.

### (Comparative Example 3)

A coating liquid was produced in the same manner as in Example 1 except that the emulsion was changed to Boncoat DV759 EF manufactured by DIC Corporation and additionally stirred at 2000 rpm for 5 minutes using a rotation-revolution stirring mixer (manufactured by THINKY CORPORATION, product name: Awatori Rentaro, model number: ARE-310). The obtained coating liquid was evaluated in the same manner as in Example 1. The results are shown in Table 3.

**[Table 1]**

| | | Example 1 | Example 2 | Example 3 | Example 4 |
|---|---|---|---|---|---|
| Coating liquid | Average diameter of aggregate (µm) | 103 | 58 | 35 | 25 |
| | Content of chloride ions (mass ppm) | < 1 | < 1 | < 1 | < 1 |
| | Content of sulfate ions (mass ppm) | < 1 | < 1 | < 1 | < 1 |
| Composite material | Content of aerogel particles (vol%) | 85 | 85 | 85 | 85 |
| | Pore volume (cm³/g) | 1.0 | 1.0 | 1.0 | 1.0 |
| | Thermal conductivity (W/(m·K)) | 0.03 | 0.03 | 0.03 | 0.03 |
| | Cracking evaluation (23°C) | B | A | A | A |
| | Cracking evaluation (10°C) | B | A | A | A |
| | Corrosion resistance | A | A | A | A |
| | Weather resistance | Grade 2 | Grade 2 | Grade 2 | Grade 2 |
| | Flex resistance | A | A | A | A |

**[Table 2]**

| | | Example 5 | Example 6 | Example 7 |
|---|---|---|---|---|
| Coating liquid | Average diameter of aggregate (µm) | 78 | 65 | 81 |
| | Content of chloride ions (mass ppm) | < 1 | < 1 | < 1 |
| | Content of sulfate ions (mass ppm) | < 1 | < 1 | < 1 |
| Composite material | Content of aerogel particles (vol%) | 77 | 85 | 85 |
| | Pore volume (cm³/g) | 0.9 | 0.9 | 0.9 |
| | Thermal conductivity (W/(m·K)) | 0.04 | 0.04 | 0.03 |
| | Cracking evaluation (23°C) | A | B | A |
| | Cracking evaluation (10°C) | A | B | A |
| | Corrosion resistance | A | A | A |
| | Weather resistance | Grade 2 | Grade 2 | Grade 2 |
| | Flex resistance | A | A | A |

**[Table 3]**

| | | Comparative Example 1 | Comparative Example 2 | Comparative Example 3 |
|---|---|---|---|---|
| Coating liquid | Average diameter of aggregate (µm) | 83 | 12 | 10 |
| | Content of chloride ions (mass ppm) | 51 | 51 | 51 |
| | Content of sulfate ions (mass ppm) | 220 | 220 | 220 |
| Composite material | Content of aerogel particles (vol%) | 85 | 85 | 85 |
| | Pore volume (cm³/g) | 1.0 | 0.1 | 0.1 |
| | Thermal conductivity (W/(m·K)) | 0.03 | 0.04 | 0.04 |
| | Cracking evaluation (23°C) | A | C | C |
| | Cracking evaluation (10°C) | C | C | C |
| | Corrosion resistance | C | C | C |
| | Weather resistance | Grade 4 | Grade 4 | Grade 4 |
| | Flex resistance | B | B | B |

## Claims

1. A coating liquid comprising:
emulsion particles containing a binder resin;
aerogel particles;
a water-soluble polymer having a hydrophobic group; and
a liquid medium, wherein
a content of chloride ions is 50 ppm by mass or less, and a content of sulfate ions is 50 ppm by mass or less.

2. The coating liquid according to claim 1, wherein at least a part of the aerogel particles forms aggregates.

3. The coating liquid according to claim 2, wherein the average diameter of the aggregates is 2 to 40 times the average diameter of the aerogel particles.

4. The coating liquid according to claim 1, wherein the emulsion particles further contain a nonionic emulsifier.

5. The coating liquid according to claim 4, wherein the nonionic emulsifier is polyoxyethylene alkyl ether.

6. The coating liquid according to claim 1, wherein the binder resin has a Tg of 10°C or lower.

7. The coating liquid according to claim 1, wherein the hydrophobic group is an alkyl group having 6 to 26 carbons.

8. A method for producing a coating liquid, the method comprising:
an emulsion preparation step of preparing an emulsion including emulsion particles containing a binder resin, and a first liquid medium;
a dispersion preparation step of mixing aerogel particles, a water-soluble polymer having a hydrophobic group, and a second liquid medium to obtain a dispersion containing the aerogel particles, the water-soluble polymer, and the second liquid medium; and
a coating liquid production step of mixing the emulsion and the dispersion to obtain a coating liquid, wherein
a content of chloride ions in the coating liquid is 50 ppm by mass or less, and a content of sulfate ions in the coating liquid is 50 ppm by mass or less.

9. The method for producing a coating liquid according to claim 8, wherein
the dispersion preparation step is a step of mixing the aerogel particles, the water-soluble polymer, and the second liquid medium to aggregate the aerogel particles, and
the coating liquid production step is a step of obtaining a coating liquid containing aggregates of the aerogel particles.

10. The method for producing a coating liquid according to claim 9, wherein the average diameter of the aggregates is 2 to 40 times the average diameter of the aerogel particles.

11. The method for producing a coating liquid according to claim 8, wherein the emulsion particles further contain a nonionic emulsifier.

12. The method for producing a coating liquid according to claim 11, wherein the nonionic emulsifier is polyoxyethylene alkyl ether.

13. The method for producing a coating liquid according to claim 8, wherein the binder resin has a Tg of 10°C or lower.

14. The method for producing a coating liquid according to claim 8, wherein the hydrophobic group is an alkyl group having 6 to 26 carbons.

15. A method for producing a composite material, the method comprising:
an application step of applying the coating liquid according to any one of claims 1 to 7 onto a support to obtain a coating film; and
a removing step of removing at least a part of the liquid medium from the coating film to obtain a composite material.

16. A method for producing a composite material, the method comprising:
an application step of applying the coating liquid produced by the production method according to any one of claims 8 to 14 onto a support to obtain a coating film; and
a removing step of removing at least a part of the liquid medium from the coating film to obtain a composite material.

17. A composite material which is a dried product of the coating liquid according to any one of claims 1 to 7.

18. An article comprising the composite material according to claim 17.
